# EUROPEAN PATENT APPLICATION

(11) **EP 4 822 877 A1**
(43) Date of publication of application: **14.10.2026**
(21) Application number: 25751315.0
(22) Date of filing: 23.01.2025
(51) Int. Cl.: H01M 50/531, H01M 50/533, H01M 50/593

(54) **BATTERY CELL, BATTERY AND ELECTRIC DEVICE**

(30) Priority: 08.02.2024 CN 202420290165 U
(71) Applicant: Contemporary Amperex Technology Co., Limited, Ningde, Fujian 352100 (CN)
(72) Inventor: ZHANG, Shengwu, Ningde, Fujian 352100 (CN); YU, Mingxi, Ningde, Fujian 352100 (CN); XIE, Yongfeng, Ningde, Fujian 352100 (CN)
(74) Representative: Lorenz Seidler Gossel Part. mbB
(86) International application number: PCT/CN2025/074466
(87) International publication number: WO 2025/167713

(57) **Abstract**

The present application relates to the technical field of batteries. Provided are a battery cell, a battery, and an electric device. The battery cell comprises a casing, binding portions and at least one electrode assembly, wherein the casing is provided with first wall portions; the electrode assembly is accommodated in the casing, and comprises electrode sheets stacked in a first direction, the electrode sheets and the first wall portions being stacked in the first direction; the electrode assembly comprises a body portion and tabs, the tabs being provided on at least one section of the body portion and in a second direction, and the first direction intersecting with the second direction; the binding portions are disposed in the casing, and in the first direction, the tabs of the electrode assembly that is closest to the first wall portions are first tabs, the binding portions are connected to an insulating body, and at least parts of the binding portions extend to positions between the first tabs and the first wall portions and abut against the surfaces of the first tabs facing the first wall portions. The improvement of the cycle performance of the battery cell is facilitated.

## Description

### CROSS-REFERENCE TO RELATED APPLICATIONS

The present application claims priority to the Chinese patent application 202420290165.6 filed on February 8, 2024 and entitled "BATTERY CELL, BATTERY, AND ELECTRIC DEVICE", which is incorporated herein by reference in its entirety.

### TECHNICAL FIELD

The present application relates to the technical field of batteries, and in particular, to a battery cell, a battery, and an electric device.

### BACKGROUND

Batteries are widely used in fields such as new energy vehicles and electronic devices. As the demand for batteries continues to grow and their application scope expands, increasingly stringent requirements are being placed on the cycling performance of batteries.

### SUMMARY

Embodiments of the present application provide a battery cell, a battery, and an electric device to improve the cycling performance of the battery cell.

According to a first aspect, an embodiment of the present application provides a battery cell, the battery cell including a casing, a binding portion, and at least one electrode assembly; where the casing has a first wall portion; the electrode assembly is accommodated in the casing, the electrode assembly includes electrode sheets stacked along a first direction, the electrode sheets and the first wall portion are stacked along the first direction, the electrode assembly includes a main body portion and tabs, the main body portion is provided with the tabs at at least one section along a second direction, and the first direction and the second direction intersect with each other; and the binding portion is provided in the casing; where along the first direction, the tab of the electrode assembly closest to the first wall portion is a first tab, and the binding portion is at least partially disposed between the first tab and the first wall portion and abuts against a surface of the first tab facing the first wall portion.

In the above technical solution, the casing of the battery cell has a first wall portion arranged with the electrode sheets along the first direction, the binding portion abuts against a side, facing the first wall portion, of the first tab of the electrode assembly closest to the first wall portion of the casing, providing a restraining force to the first tab, reducing the gap between layers of the first tab, thereby reducing the gap between the main body regions of the electrode sheets connected to the first tab. Consequently, the gap between the electrode sheets on a side, close to the first wall portion, of the electrode assembly closest to the first wall portion is minimized, which helps improve the cycling performance of the battery cell.

In some embodiments of the first aspect of the present application, the electrode assembly closest to the first wall portion along the first direction has a central plane, the central plane is perpendicular to the first direction, and the first tab is at least partially disposed on a side of the central plane close to the first wall portion.

In the above technical solution, the first tab is at least partially disposed on a side, close to the first wall portion, of the central plane of the electrode assembly closest to the first wall portion. This facilitates the abutment between the binding portion and the first tab, enabling the binding portion to provide a restraining force to the first tab, thereby helping reduce the gap between layers of the first tab, and further reducing the gap between the main body regions of the electrode sheets connected to the first tab. Consequently, the gap between the electrode sheets on a side, close to the first wall portion, of the electrode assembly closest to the first wall portion is minimized, which helps improve the cycling performance of the battery cell.

In some embodiments of the first aspect of the present application, along the first direction, a gap is present between the first wall portion and the main body portion of the electrode assembly closest to the first wall portion.

In the above technical solution, along the first direction, a gap is present between the first wall portion and the main body portion of the electrode assembly closest to the first wall portion, providing expansion space for the electrode assembly, reducing the risk of explosion, fire, and other hazards in the battery cell, and improving the reliability of the battery cell.

In some embodiments of the first aspect of the present application, the first tab includes multiple tab segments stacked along the first direction, where a junction between the main body portion and the tab segment closest to the first wall portion among the multiple tab segments of the first tab is a first position; and the binding portion has an abutting end that abuts against the first tab, and along the first direction, a distance between an end of the abutting end away from the first wall portion, the surface abutting against the first tab, and the first wall portion is greater than a distance between the first position and the first wall portion.

In the above technical solution, along the first direction, the distance between the end of the abutting end of the binding portion away from the first wall portion and the surface that abuts against the first tab and the first wall portion is greater than the distance between the first position and the first wall portion, enabling the binding portion to press the first tab along a direction away from the first wall portion in the first direction, thereby reducing the gap between layers of the first tab, and further reducing the gap between the main body regions of the electrode sheets connected to the first tab. Consequently, the gap between the electrode sheets on a side, close to the first wall portion, of the electrode assembly closest to the first wall portion is minimized, which helps improve the cycling performance of the battery cell.

In some embodiments of the first aspect of the present application, the surface of the abutting end that abuts against the first tab is an arc surface.

In the above technical solution, the surface of the abutting end that abuts against the first tab is an arc surface, which can lower the risk of damaging or injuring the first tab when the abutting end abuts against the first tab.

In some embodiments of the first aspect of the present application, the casing has a second wall portion, the second wall portion and the tabs are arranged along the second direction, the battery cell includes an electrode terminal, and the electrode terminal is disposed on the second wall portion; the first tab includes a first tab root, a first bending portion, and a first connection portion, where the first tab root is connected to the main body portion, the first bending portion connects the first tab root and the first connection portion, and the first connection portion is electrically connected to the electrode terminal; and the binding portion abuts against a surface of the first tab root facing the first wall portion.

In the above technical solution, the binding portion abuts against the surface of the first tab root facing the first wall portion, such that the abutting position of the binding portion against the first tab is closer to the main body region of the electrode sheet connected to the first tab. This exerts a better restraining effect on the main body region of the electrode sheet, which is more conducive to reducing the gap between the electrode sheets on a side, close to the first wall portion, of the electrode assembly closest to the first wall portion, and helps improve the cycling performance of the battery cell.

In some embodiments of the first aspect of the present application, the battery cell further includes an insulating layer, the insulating layer being at least partially disposed on a surface of the first tab root.

In the above technical solution, the battery cell further includes an insulating layer at least partially disposed on a surface of the first tab root, which helps improve the strength of the first tab and reducing the risk of the first tab being torn.

In some embodiments of the first aspect of the present application, the binding portion includes an abutting section and an extending section, where the extending section is at least partially disposed between the first tab and the first wall portion, along a direction from the tab toward the main body portion, the abutting section protrudes from one end of the extending section, and the abutting section abuts against the first tab root.

In the above technical solution, the binding portion includes an abutting section and an extending section, where the extending section is at least partially disposed between the first tab and the first wall portion, and along the direction from the tab toward the main body portion, the abutting section protrudes from one end of the extending section, and the abutting section abuts against the first tab root, which can reduce the space occupied by the binding portion, facilitate the abutment against the first tab, and lower the risk of positional interference between the first tab and the binding portion.

In some embodiments of the first aspect of the present application, the abutting section protrudes from the extending section along a direction away from the first wall portion in the first direction.

In the above technical solution, the abutting section protrudes from the extending section along a direction away from the first wall portion in the first direction, making the abutting section closer to the first tab in the first direction, facilitating the abutting section to abut against the first tab.

In some embodiments of the first aspect of the present application, the electrode assembly closest to the first wall portion along the first direction has a central plane, the central plane is perpendicular to the first direction, and the first bending portion is located on a side of the central plane facing the first wall portion.

In the above technical solution, the first bending portion of the first tab is located on a side, facing the first wall portion, of the central plane of the electrode assembly closest to the first wall portion. It can be understood that the multiple tab segments of the first tab are gathered in a direction toward the first wall portion, reducing the distance between the surface of the first tab facing the first wall portion and the first wall portion, and facilitating the binding portion to abut against the first tab.

In some embodiments of the first aspect of the present application, the binding portion includes an extending section and an abutting section, the abutting section being bent from the extending section in a direction toward the first tab.

In the above technical solution, the abutting section is bent in a direction toward the first tab, facilitating the abutting section to abut against the first tab. The abutting section is bent in a direction toward the first tab, making an end of the abutting section away from the extending section capable of abutting against the first tab root, which not only can provide a better restraining force to the first tab, but also lower the risk of excessive contact area between the first tab and the abutting section, which would otherwise interfere with the connection between the first tab and other structures.

In some embodiments of the first aspect of the present application, an end of the abutting section away from the extending section forms an abutting end, the abutting end abuts against the first tab, the abutting section has a first surface facing the first tab, the first surface extends to the abutting end, and the first surface is an arc surface.

In the above technical solution, an end of the abutting section away from the extending section forms an abutting end that abuts against the first tab, that is, an end of the abutting section away from the extending section is capable of abutting against the first tab, which not only can provide a better restraining force to the first tab, but also lower the risk of excessive contact area between the first tab and the abutting section, which would otherwise interfere with the connection between the first tab and other structures. The first surface is an arc surface, which facilitates the abutting section to form a structure bent in a direction toward the first tab, simplifies the manufacturing and molding the abutting section, and also facilitates the abutment of the abutting section against the first tab.

In some embodiments of the first aspect of the present application, the extending section has a second surface facing the first tab, the first surface and the second surface are connected, and along the direction from the tab toward the main body portion, the distance between the second surface and the first wall portion in the first direction increases gradually.

In the above technical solution, the extending section has a second surface facing the first tab, and along the direction from the tab toward the main body portion, the distance between the second surface and the first wall in the first direction increases gradually, which lowers the risk that the extending section excessively compresses the first tab and causes cracking of the first tab.

In some embodiments of the first aspect of the present application, the electrode assembly closest to the first wall portion includes multiple first tabs, where the multiple first tabs are arranged along a third direction; and the extending section is provided with multiple abutting sections, where the multiple abutting sections are spaced apart along the third direction, one first tab corresponds to at least one abutting section, and the first direction, the second direction, and the third direction are non-coplanar and intersect with each other pairwise.

In the above technical solution, the electrode assembly closest to the first wall portion includes multiple first tabs, the extending section is provided with multiple abutting sections, and each abutting section abuts against one first tab, which can provide a better restraining force for each first tab.

In some embodiments of the first aspect of the present application, the casing has a second wall portion, the second wall portion and the first wall portion are adjacently arranged and connected, and the second wall portion and the tabs are arranged along the second direction; and the battery cell further includes an insulating body, where the insulating body is disposed on a side of the tabs facing the second wall portion to insulate and isolate the second wall portion and the tabs, and the binding portion is connected to the insulating body.

In the above technical solution, the battery cell further includes an insulating body, where the insulating body is provided between a side of the tabs facing the second wall portion and the second wall portion, to lower the risk of internal short-circuiting of the battery cell and improve the reliability of the battery cell.

In some embodiments of the first aspect of the present application, the binding portion includes an extending section and an abutting section, where the extending section is at least partially disposed between the first tab and the first wall portion, the abutting section protrudes from one end of the extending section, and the abutting section abuts against the first tab; and the battery cell further includes a second bending portion, where the second bending portion connects the insulating body and the extending section.

In the above technical solution, the insulating body and the extending section are connected via the second bending portion, making the insulating body and the binding portion able to form a single unit, which can improve the stability of the insulating body and the binding portion inside the battery cell, thereby improving the reliability of the insulating body and the binding portion.

In some embodiments of the first aspect of the present application, a thickness of the insulating body and a thickness of the extending section are both greater than a thickness of the second bending portion.

In the above technical solution, the thickness of the insulating body and the thickness of the extending section are both greater than the thickness of the second bending portion, such that the strength of the insulating body and the strength of the extending section are both greater than the strength of the second bending section. This facilitates the bending and forming of the extending section relative to the insulating body at the second bending portion, and thus facilitates the manufacturing and molding of the insulating body and the binding portion into an integral structure.

In some embodiments of the first aspect of the present application, the second bending portion is provided with a through hole, where the through hole penetrates both sides of the second bending portion in the thickness direction; and/or the second bending portion is provided with a groove on at least one surface in the thickness direction of the second bending portion.

In the above technical solution, the second bending portion is provided with a through hole, and the molding method of the through hole is simple and convenient. This in turn simplifies the method of reducing the strength of the second bending portion, making the second bending portion easier to bend, and thus facilitating the forming of the insulating body, the binding portion, and the second bending portion. The provision of the through hole also helps reduce the weight of the battery cell. A groove is provided on at least one surface of the second bending portion along the thickness direction of the second bending portion, which simplifies the method of reducing the strength of the second bending portion.

In some embodiments of the first aspect of the present application, the battery cell includes multiple second bending portions, where the multiple second bending portions are spaced apart along the third direction, and the first direction, the second direction, and the third direction are non-coplanar and intersect with each other pairwise.

In the above technical solution, the battery cell includes multiple second bending portions spaced apart along the third direction, making the connection stability between the insulating body and the extending section better.

In some embodiments of the first aspect of the present application, the binding portion and the insulating body are integrally formed.

In the above technical solution, the binding portion and the insulating body are integrally formed, which facilitates the forming of the binding portion and the insulating body into an integral structure and ensures that the integral structure formed by the binding portion and the insulating body has better strength.

In some embodiments of the first aspect of the present application, the battery includes a locking structure, where the locking structure is adapted to lock the binding portion and the insulating body to restrain the binding portion from flipping relative to the insulating body in a direction toward the first wall portion.

In the above technical solution, the binding portion and the insulating body are locked via the locking structure to restrain the binding portion from flipping relative to the insulating body in a direction toward the first wall portion. This lowers the risk of the binding portion detaching from the first tab, enabling the binding portion to stably restrain the first tab, thereby reducing the gap between the electrode sheets of the electrode assembly that are proximal to the first wall portion, and helping improve the cycling performance of the battery cell.

In some embodiments of the first aspect of the present application, the locking structure includes a first locking portion and a second locking portion, where the first locking portion is configured to be in snap fit with the second locking portion to lock the insulating body and the binding portion.

In the above technical solution, the snap fit between the first locking portion and the second locking portion facilitates the locking of the insulating body and the binding portion.

In some embodiments of the first aspect of the present application, the first locking portion is provided with a locking hole, and the second locking portion is snapped into the locking hole.

In the above technical solution, the first locking portion is provided with a locking hole, and the second locking portion is snapped into the locking hole, which not only facilitates the locking of the insulating body and the binding portion, but also makes the structure of the locking structure simple.

In some embodiments of the first aspect of the present application, the second locking portion includes a first elastic portion and a second elastic portion arranged at relative intervals, where the second locking portion is configured to be insertable into the locking hole when the first elastic portion and the second elastic portion approach each other.

In the above technical solution, the second locking portion includes a first elastic portion and a second elastic portion arranged at relative intervals, which facilitates the snapping of the first locking portion and the second locking portion.

In some embodiments of the first aspect of the present application, the first locking portion is provided on the insulating body, and the second locking portion is provided on the binding portion; or the first locking portion is provided on the binding portion, and the second locking portion is provided on the insulating body.

In the above technical solution, the first locking portion is provided on the insulating body and the second locking portion on the binding portion, or the first locking portion is provided on the binding portion and the second locking portion on the insulating body, to be specific, the first locking portion and the second locking portion are respectively provided on the insulating body and the binding portion, which facilitates the arrangement of the first locking portion and the second locking portion and facilitates the snap-fitting of the first locking portion and the second locking portion.

In some embodiments of the first aspect of the present application, the first locking portion is provided on the insulating body and protrudes from a surface of the insulating body facing the main body portion; and the second locking portion is provided on the binding portion and protrudes from a surface of the binding portion facing the first tab.

In the above technical solution, the first locking portion is provided on the insulating body and protrudes from a surface of the insulating body facing the main body portion; and the second locking portion is provided on the binding portion and protrudes from a surface of the binding portion facing the first tab, which facilitates the cooperation of the first locking portion and the second locking portion.

In some embodiments of the first aspect of the present application, the casing includes a case and an end cap, where the case has an opening, the end cap seals the opening, and the second wall portion is the end cap.

In the above technical solution, the second wall portion is the end cap, and thus the first wall portion is a wall portion of the case, which facilitates the arrangement of the electrode assembly and the first wall portion, thereby facilitating the assembly of the battery cell.

In some embodiments of the first aspect of the present application, the surface of the first tab facing the first wall portion includes a concave surface, and the binding portion abuts against the concave surface.

In the above technical solution, the surface of the first tab facing the first wall portion includes a concave surface, and the binding portion abuts against the concave surface, which improves the stability of the abutting between the binding portion and the first tab.

In some embodiments of the first aspect of the present application, the casing includes two first wall portions arranged oppositely; and the battery cell includes multiple electrode assemblies, where the multiple electrode assemblies are arranged along the first direction between the two first wall portions, along the first direction, the tabs of the electrode assemblies at both ends are both the first tabs; and the binding portions are disposed on both sides of the set of the multiple electrode assemblies along the first direction, and the binding portions on both sides of the set of the multiple electrode assemblies respectively abut against the first tabs of the electrode assemblies at both ends along the first direction.

In the above technical solution, the multiple electrode assemblies form a single unit, with binding portions disposed on both sides of the unit along the first direction. The binding portions on both sides of the set of the multiple electrode assemblies respectively abut against the first tabs of the electrode assemblies at both ends along the first direction, which exerts a restraining effect on the first tabs of the two outermost electrode assemblies, reduces the gap between layers of the first tabs of the two outermost electrode assemblies, and thus reduces the gap between the main body regions of the electrode sheets connected to the first tabs. Consequently, the gap between the electrode sheets on a side of the two outermost electrode assemblies closest to the first wall portion is reduced, which helps improve the cycling performance of the battery cell.

According to a second aspect, an embodiment of the present application provides a battery, the battery including the battery cell according to an embodiment of the first aspect.

In the above technical solution, the battery cell according to this embodiment of the first aspect has better cycling performance, and the battery including the battery cell has better cycling performance accordingly.

According to a third aspect, an embodiment of the present application provides an electric device, the electric device including the battery cell according to an embodiment of the first aspect.

### DESCRIPTION OF DRAWINGS

In order to more clearly illustrate the technical solutions of the embodiments of the present application, the accompanying drawings to be used in the embodiments will be briefly introduced below. It should be understood that the following drawings only illustrate some embodiments of the present application and should not be regarded as limiting the scope. For those of ordinary skill in the art, other related drawings can be obtained based on these drawings without creative effort.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a cross-sectional view of a battery cell according to some embodiments of the present application;
FIG. 5 is a schematic diagram of cooperation between an insulating body and a second wall portion according to some embodiments of the present application (state where a binding portion is not bent relative to the insulating body);
FIG. 6 is a schematic structural diagram of an electrode assembly according to some embodiments of the present application;
FIG. 7 is a schematic diagram of a state where an insulating body and a second wall portion cooperate and the binding portion is not bent relative to the insulating body according to some embodiments of the present application;
FIG. 8 is a schematic diagram of a state where an insulating body and a second wall portion cooperate and the binding portion is bent relative to the insulating body according to some embodiments of the present application;
FIG. 9 is a schematic diagram of a state where an insulating body and a second wall portion cooperate and the binding portion is bent relative to the insulating body according to some other embodiments of the present application;
FIG. 10 is a schematic diagram of a state where an insulating body and a second wall portion cooperate and the binding portion is not bent relative to the insulating body according to still some other embodiments of the present application;
FIG. 11 is a schematic diagram of a state where an insulating body and a second wall portion cooperate and the binding portion is not bent relative to the insulating body and the binding portion and the insulating body are not locked by a locking structure according to yet some other embodiments of the present application;
FIG. 12 is a cross-sectional view along direction A1-A1 in FIG. 11;
FIG. 13 is a schematic diagram of a state after an insulating body and a second wall portion cooperate and the binding portion is bent relative to the insulating body and the binding portion and the insulating body are locked by a locking structure in FIG. 11;
FIG. 14 is a cross-sectional view along direction A2-A2 in FIG. 13;
FIG. 15 is a schematic structural diagram of a second locking portion according to some embodiments of the present application;
FIG. 16 is a schematic structural diagram of a second locking portion according to some other embodiments of the present application;
FIG. 17 is a schematic diagram of a state where an insulating body and a second wall portion cooperate and the binding portion is not bent relative to the insulating body and the binding portion and the insulating body are not locked by a locking structure according to still some other embodiments of the present application;
FIG. 18 is a cross-sectional view along direction A3-A3 in FIG. 17;
FIG. 19 is a cross-sectional view of a state where an insulating body and a second wall portion cooperate and the binding portion is not bent relative to the insulating body and the binding portion and the insulating body are not locked by a locking structure according to still some other embodiments of the present application; and
FIG. 20 is a schematic structural diagram of the insulating body and the binding portion being locked by a locking structure in FIG. 19.

Reference signs: 1000: vehicle; 100: battery; 10: box; 11: first box body; 12: second box body; 20: battery cell; 21: casing; 211: first wall portion; 212: second wall portion; 213: opening; 214: case; 215: end cap; 221: insulating body; 2211: avoidance hole; 222: binding portion; 2221: abutting section; 22211: abutting end; 22212: first surface; 2222: extending section; 22221: second surface; 223: second bending portion; 2232: through hole; 224: locking structure; 2241: first locking portion; 22411: locking hole; 22412: third guide surface; 22413: first hole section; 22414: second hole section; 22415: step surface; 2242: second locking portion; 22421: first elastic portion; 224211: first limiting portion; 224212: first body; 224213: first guide surface; 22422: second elastic portion; 224221: second limiting portion; 224222: second body; 224223: second guide surface; 23: electrode assembly; 23a: electrode sheet; 231: main body portion; 232: tab; 233: first tab; 2331: first tab root; 2332: first bending portion; 2333: first connection portion; 2334: concave surface; 24: electrode terminal; 25: current collector member; 200: controller; 300: motor; X: first direction; Y: second direction; Z: third direction; A: central plane; and B: first position.

### DETAILED DESCRIPTION

In order to make the objectives, technical solutions, and advantages of the embodiments of the present application clearer, the technical solutions in the embodiments of the present application will be clearly and completely described below in conjunction with the accompanying drawings in the embodiments of the present application. Obviously, the described embodiments are some embodiments of the present application, but not all embodiments. The components of the embodiments of the present application described and illustrated herein can be arranged and designed in various different configurations.

Therefore, the following detailed description of the embodiments of the present application provided in the accompanying drawings is not intended to limit the scope of the claimed present application, but merely represents selected embodiments of the present application. Based on the embodiments in the present application, all other embodiments obtained by those of ordinary skill in the art without creative effort belong to the scope of protection of the present application.

It should be noted that, in the case of no conflict, the embodiments in the present application and the features in the embodiments can be combined with each other.

It should be noted that similar reference signs and letters indicate similar items in the following drawings, and therefore, once an item is defined in one drawing, it does not need to be further defined and explained in subsequent drawings.

In the description of the embodiments of the present application, it should be noted that the orientation or positional relationship indicated is based on the orientation or positional relationship shown in the drawings, or the conventional placement orientation or positional relationship when the product of the application is used, or the orientation or positional relationship conventionally understood by those skilled in the art, which is only for the convenience of describing the present application and simplifying the description, and does not indicate or imply that the device or element referred to must have a specific orientation, be constructed and operated in a specific orientation, and therefore should not be understood as limiting the present application. In addition, the terms "first", "second", "third", and the like are only used for distinguishing descriptions and should not be understood as indicating or implying relative importance.

The "plurality" appearing in the present application refers to two or more (including two).

In the embodiments of the present application, the battery cell may be a secondary battery, and the secondary battery refers to a battery cell that can continue to be used by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickelcadmium battery, a lead-acid battery, or the like, and the embodiments of the present application do not limit thereto.

The battery cell generally includes an electrode assembly. The electrode assembly includes a positive electrode, a negative electrode, and a separator. During the charging and discharging process of the battery cell, active ions (such as lithium ions) are intercalated into and deintercalated from the positive electrode and the negative electrode. The separator is provided between the positive electrode and the negative electrode, which can prevent a short circuit between the positive and negative electrodes and allow active ions to pass through.

In some embodiments, the positive electrode may be a positive electrode sheet, and the positive electrode sheet may include a positive electrode current collector and a positive electrode active material provided on at least one surface of the positive electrode current collector.

As an example, the positive electrode current collector has two opposite surfaces in its own thickness direction, and the positive electrode active material is provided on either or both of the two opposite surfaces of the positive electrode current collector.

As an example, the positive electrode current collector may adopt a metal foil or a composite current collector. For example, as the metal foil, aluminum with silver-plated surface, stainless steel with silver-plated surface, stainless steel, copper, aluminum, nickel, carbon electrode, carbon, nickel, or titanium may be used. The composite current collector may include a polymer substrate layer and a metal layer. The composite current collector may be formed by forming a metal material (aluminum, aluminum alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, and polyethylene).

As an example, the positive electrode active material may include at least one of the following materials: lithium-containing phosphates, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium-containing phosphates may include, but are not limited to, at least one of lithium iron phosphate (such as LiFePO₄ (also abbreviated as LFP)), lithium iron phosphate-carbon composite material, lithium manganese phosphate (such as LiMnPO₄), lithium manganese phosphate-carbon composite material, lithium manganese iron phosphate, and lithium manganese iron phosphate-carbon composite material. Examples of lithium transition metal oxides may include, but are not limited to, at least one of lithium cobalt oxide (such as LiCoO₂), lithium nickel oxide (such as LiNiO₂), lithium manganese oxide (such as LiMnO₂, LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (such as LiNi_{0.85}Co_{0.15}Al_{0.05}O₂)) and their modified compounds.

In some embodiments, the positive electrode may adopt foam metal. The foam metal may be foam nickel, foam copper, foam aluminum, foam alloy materials, or the like. When foam metal is used as the positive electrode, the surface of the foam metal may not be provided with a positive electrode active material, or may be provided with a positive electrode active material. As an example, a lithium source material, potassium metal, or sodium metal may also be filled and/or deposited in the foam metal, and the lithium source material is lithium metal and/or lithium-rich materials.

In some embodiments, the negative electrode may be a negative electrode sheet, and the negative electrode sheet may include a negative electrode current collector.

As an example, the negative electrode current collector may adopt a metal foil, foam metal, or composite current collector. For example, as the metal foil, aluminum or stainless steel with silver surface treatment, stainless steel, copper, aluminum, nickel, carbon electrode, nickel, or titanium may be used. The foam metal may be foam nickel, foam copper, foam aluminum, foam alloy, or the like. The composite current collector may include a polymer substrate layer and a metal layer. The composite current collector may be formed by forming a metal material (copper, copper alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, and polyethylene).

As an example, the negative electrode sheet may include a negative electrode current collector and a negative electrode active material provided on at least one surface of the negative electrode current collector.

As an example, the negative electrode current collector has two opposite surfaces in its own thickness direction, and the negative electrode active material is provided on either or both of the two opposite surfaces of the negative electrode current collector.

As an example, the negative electrode active material may adopt a negative electrode active material for the battery cell 20 well known in the art. As an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon oxides, silicon-carbon composite, silicon-nitrogen composite, and silicon alloy. The tin-based material may be selected from at least one of elemental tin, tin oxides, and tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly further includes a separator provided between the positive electrode and the negative electrode.

In some embodiments, the separator is a separator film. The type of separator film may be various, and any well-known porous separator film with good chemical and mechanical stability may be selected.

As an example, the material of the separator film may include at least one of glass fiber, non-woven fabrics, polyethylene, polypropylene, and polyvinylidene fluoride. The separator film may be a single-layer film or a multilayer composite film. When the separator film is a multilayer composite film, the materials of the various layers may be the same or different. The separator may be a separate component located between the positive and negative electrodes or may be attached to the surfaces of the positive and negative electrodes.

In some embodiments, the separator is a solid electrolyte. The solid electrolyte is provided between the positive electrode and the negative electrode, and functions to conduct ions and isolate the positive and negative electrodes at the same time.

In some embodiments, the battery cell further includes an electrolyte, and the electrolyte functions to conduct ions between the positive and negative electrodes. The electrolyte may be liquid, gel, or solid. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel electrolyte includes a polymer as a skeleton network of the electrolyte, with an ionic liquid-lithium salt system.

The solid electrolyte includes a polymer solid electrolyte, an inorganic solid electrolyte, and a composite solid electrolyte.

As an example, the polymer solid electrolyte may be polyethers (polyethylene oxide), polysiloxanes, polycarbonates, polyacrylonitriles, polyvinylidene fluorides, polymethyl methacrylates, single-ion polymers, polyionic liquid-lithium salt systems, cellulose, or the like.

As an example, the inorganic solid electrolyte may include one or more of oxide solid electrolytes (crystalline perovskites, sodium superconducting ionic conductors, garnets, amorphous LiPON films), sulfide solid electrolytes (crystalline lithium superionic conductors (lithium germanium phosphorus sulfurs, argyrodites), amorphous sulfides), halide solid electrolytes, nitride solid electrolytes, and hydride solid electrolytes.

As an example, the composite solid electrolyte is formed by adding inorganic solid electrolyte filler to the polymer solid electrolyte.

In some embodiments, the electrode assembly is a wound structure. The positive electrode sheet and the negative electrode sheet are wound into a wound structure.

In some embodiments, the electrode assembly is a laminated structure.

As an example, both the positive electrode sheet and the negative electrode sheet may be provided in plurality, and the multiple positive electrode sheets and the multiple negative electrode sheets are alternately stacked.

As an example, the positive electrode sheet may be provided in plurality, the negative electrode sheet is folded to form multiple stacked folding sections, and a positive electrode sheet is sandwiched between adjacent folding sections.

As an example, both the positive electrode sheet and the negative electrode sheet are folded to form multiple stacked folding sections.

As an example, the separator may be provided in plurality, respectively provided between any adjacent positive electrode sheets and negative electrode sheets.

As an example, the separators may be provided continuously and disposed between any adjacent positive electrode sheets and negative electrode sheets by folding or winding.

In some embodiments, the shape of the electrode assembly may be cylindrical, flat, multi-prismatic, or the like.

In some embodiments, the electrode assembly is provided with tabs, and the tabs can conduct current out of the electrode assembly. The tabs include positive electrode tabs and negative electrode tabs.

In some embodiments, the battery cell may include a casing. The casing serves to enclose components such as the electrode assembly and the electrolyte. The casing may be a steel casing, an aluminum casing, a plastic casing (such as polypropylene), a composite metal casing (such as copper-aluminum composite casing), an aluminum-plastic film, or the like.

As an example, the battery cell may be a cylindrical battery cell, a prismatic battery cell, a pouch battery cell, or a battery cell of other shapes. The prismatic battery cell includes but is not limited to square casing battery cell, blade-shaped battery cell, multi-prismatic battery. The multi-prismatic battery is, for example, a hexagonal prismatic battery.

The battery mentioned in the embodiments of the present application refers to a single physical module including one or more battery cells to provide higher voltage and capacity.

In some embodiments, the battery may be a battery module. When there are multiple battery cells, the multiple battery cells are arranged and fixed to form a battery module.

In some embodiments, the battery may be a battery pack, and the battery pack includes a box and battery cells, with the battery cells or battery modules accommodated in the box.

In some embodiments, the box may be part of the chassis structure of the vehicle. For example, part of the box may become at least part of the floor of the vehicle, or part of the box 10 may become at least part of the cross beams and longitudinal beams of the vehicle.

In some embodiments, the battery may be an energy storage device. The energy storage device includes an energy storage container, an energy storage cabinet, and the like.

The battery has outstanding advantages such as high energy density, low environmental pollution, high power density, long service life, wide applicability, and low self-discharge rate, and is an important part of the development of new energy today. The development of battery technology must take into account multiple design factors at the same time, such as performance parameters including energy density, cycle life, discharge capacity, and charge-discharge rate. In addition, the reliability of the battery needs to be considered.

In battery technology, the battery cell includes a casing and an electrode assembly, the electrode assembly is accommodated in the casing, after the electrode assembly is inserted into the casing, the tabs of the electrode assembly will be bent, and after the tabs of the electrode assembly closest to the wall portion of the casing in the stacking direction of the electrode assembly will be bent, the gap between the electrode sheets of the electrode assembly closest to the wall portion that are proximal to the wall portion may increase, which leads to a decline in the cycling performance of the battery cell.

Based on the above considerations, in order to alleviate the problem of degradation of the cycling performance of the battery cell caused by the increase in the gap between electrode sheets due to the bending of the tabs, an embodiment of the present application provides a battery cell, the battery cell including a casing, a binding portion, and at least one electrode assembly; where the casing has a first wall portion; the electrode assembly is accommodated in the casing, the electrode assembly includes electrode sheets stacked along a first direction, the electrode sheets and the first wall portion are stacked along the first direction, the electrode assembly includes a main body portion and tabs, the main body portion is provided with tabs at at least one section along a second direction, and the first direction and the second direction intersect with each other; and the binding portion is provided in the casing; where along the first direction, the tab of the electrode assembly closest to the first wall portion is a first tab, and the binding portion is at least partially disposed between the first tab and the first wall portion and abuts against a surface of the first tab facing the first wall portion.

The casing of the battery cell has a first wall portion arranged with the electrode sheets along the first direction, the binding portion abuts against a side, facing the first wall portion, of the first tab of the electrode assembly closest to the first wall portion of the casing, providing a restraining force to the first tab, reducing the gap between layers of the first tab, thereby reducing the gap between the main body regions of the electrode sheets connected to the first tab. Consequently, the gap between the electrode sheets on a side, close to the first wall portion, of the electrode assembly closest to the first wall portion is reduced, which helps improve the cycling performance of the battery cell.

The battery cell disclosed in this embodiment of the present application can be, but is not limited to, used in electric devices such as vehicles, ships, or aircraft. The power system of the electric device may be composed of the battery cell, battery, and the like disclosed in the present application, which helps alleviate the problem of increased gap between electrode sheets due to bending of tabs after the electrode assembly is inserted into the casing, and improves the cycling performance of the battery cell.

An embodiments of the present application provides an electric device using a battery as a power source, and the electric device may be, but is not limited to, a mobile phone, a tablet, a notebook computer, an electric toy, an electric tool, an electric bicycle, an electric vehicle, a ship, and a spacecraft. The electric toy may include fixed or mobile electric toys, such as a game console, an electric vehicle toy, an electric ship toy, and an electric aircraft toy. The spacecraft may include an airplane, a rocket, a space shuttle, a spaceship, and the like.

The following embodiments are described by taking a vehicle 1000 as an example of an electric device in one embodiment of the present application for convenience of explanation.

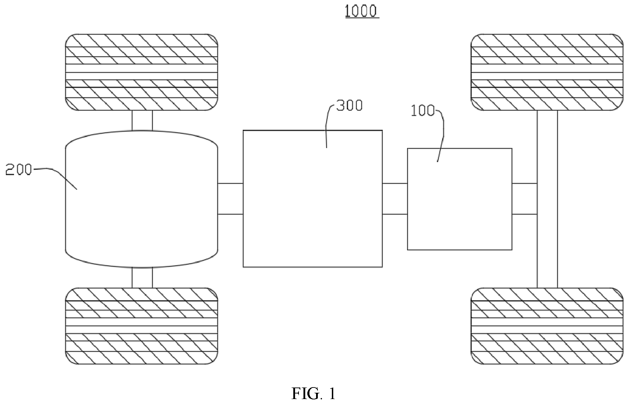

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a pure electric vehicle, a hybrid vehicle, a range-extended vehicle, or the like. A battery 100 is provided inside the vehicle 1000, and the battery 100 may be provided at the bottom of the vehicle 1000, or at the head of the vehicle 1000, or at the tail of the vehicle 1000. The battery 100 may be used to power the vehicle 1000, for example, the battery 100 may serve as an operating power source, a working power source of the vehicle 1000, or the like. The vehicle 1000 may further include a controller 200 and a motor 300, where the controller 200 is configured to control the battery 100 to supply power to the motor 300, for example, to meet the power requirements for starting, navigation, and driving of the vehicle 1000.

In some embodiments of the present application, the battery 100 can not only serve as an operating power source or a working power source of the vehicle 1000, but also as a driving power source of the vehicle 1000, replacing or partially replacing fuel or natural gas to provide driving power for the vehicle 1000.

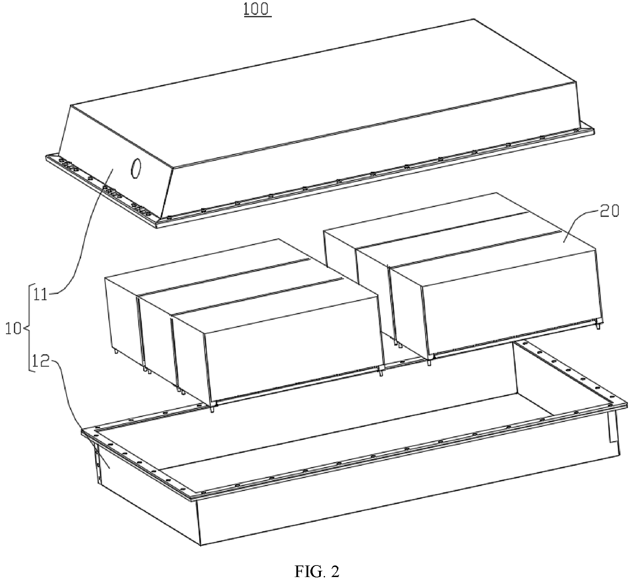

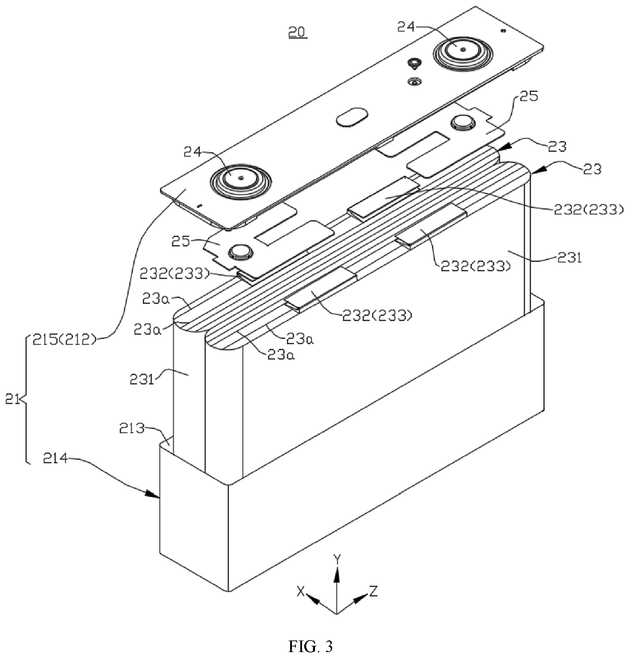

Referring to FIG. 2 and FIG. 3, FIG. 2 is an exploded view of a battery 100 according to some embodiments of the present application, and FIG. 3 is a schematic structural diagram of a battery cell 20 according to some embodiments of the present application. The battery 100 includes a box 10 and a battery cell 20, where the battery cell 20 is configured to be accommodated in the box 10.

The box 10 is configured to provide an assembly space for the battery cell 20, and the box 10 may adopt multiple structures. In some embodiments, the box 10 may include a first box body 11 and a second box body 12, where the first box body 11 and the second box body 12 are fastened to each other in a covering manner, and the first box body 11 and the second box body 12 together define an assembly space for accommodating the battery cell 20. The second box body 12 may be a hollow structure with an opening at one end, the first box body 11 may be a plate-like structure, and the first box body 11 covers the open side of the second box body 12, such that the first box body 11 and the second box body 12 together define the assembly space; alternatively, the first box body 11 and the second box body 12 may both be hollow structures with one side open, and the open side of the first box body 11 covers the open side of the second box body 12.

Certainly, the box 10 formed by the first box body 11 and the second box body 12 may have multiple shapes, such as cylindrical shape, a rectangular parallelepiped shape, or a cubic shape. Exemplarily, in FIG. 2, the shape of the box 10 is a rectangular parallelepiped.

In the battery 100, the battery cell 20 provided in the box 10 may be one or multiple. When there are multiple battery cells 20 provided in the box 10, the multiple battery cells 20 may be connected in series, in parallel, or in a combination of both, and the combination connection means that there are both series and parallel in the multiple battery cells 20. The multiple battery cells 20 may be directly connected in series, in parallel, or in a combination of both, and then a single unit formed by the multiple battery cells 20 is accommodated in the box 10; certainly, the battery 100 may also first connect multiple battery cells 20 in series, in parallel, or in a combination of both to form a battery module, and then multiple battery modules are connected in series, in parallel, or in a combination of both to form a whole, and the whole is accommodated in the box 10.

In some embodiments, the battery 100 may further include other structures, for example, the battery 100 may further include a busbar component, where the busbar component is configured to connect multiple battery cells 20 to achieve electrical connection between the multiple battery cells 20.

Each battery cell 20 may be a secondary battery or a primary battery; it may also be a lithium-sulfur battery, a sodium-ion battery, or a magnesium-ion battery, but is not limited thereto. The battery cell 20 may be in the shape of a rectangular parallelepiped, a cylinder, a prism, or other shapes. Exemplarily, in FIG. 3, the battery cell 20 is a rectangular parallelepiped structure.

As shown in FIG. 3, FIG. 4, and FIG. 5, in some embodiments, the battery cell 20 includes a casing 21, a binding portion 222, and at least one electrode assembly 23; where the casing 21 has a first wall portion 211; the electrode assembly 23 is accommodated in the casing 21, the electrode assembly 23 includes electrode sheets 23a stacked along a first direction X, the electrode sheets 23a and the first wall portion 211 are arranged along the first direction X, the electrode assembly 23 includes a main body portion 231 and tabs 232, the main body portion 231 is provided with tabs 232 at at least one end along a second direction Y, and the first direction X and the second direction Y intersect with each other; and the binding portion 222 is provided in the casing 21; where along the first direction X, the tab 232 of the electrode assembly 23 closest to the first wall portion 211 is a first tab 233, and the binding portion 222 is at least partially disposed between the first tab 233 and the first wall portion 211 and abuts against a surface of the first tab 233 facing the first wall portion 211.

An accommodation space is formed inside the casing 21, and the accommodation space is used to accommodate the electrode assembly 23. The accommodation space may also be used to accommodate the electrolyte. The electrolyte may be an electrolyte solution.

The casing 21 includes a case 214 and an end cap 215, an accommodation cavity is formed inside the case 214, the accommodation cavity is configured to accommodate the electrode assembly 23, and the accommodation cavity has at least one opening 213, that is, the case 214 is a hollow structure with an opening 213 at least one end, and the end cap 215 seals the opening 213 of the case 214 and forms a sealed connection to form an accommodation space for accommodating the electrode assembly 23 and the electrolyte.

When assembling the battery cell 20, the electrode assembly 23 may first be placed into the case 214, and the electrolyte solution is filled into the case 214, and then the end cap 215 is fastened to the opening 213 of the case 214 to complete the assembly of the battery cell 20.

The first wall portion 211 may be a wall portion of the case 214, for example, the first wall portion 211 is a side wall of the case 214.

The case 214 may have multiple shapes, such as a cylinder, a rectangular parallelepiped, or a prismatic structure. The shape of the case 214 may be determined according to the specific shape of the electrode assembly 23. For example, if the electrode assembly 23 is a cylindrical structure, a cylindrical case 214 may be selected; if the electrode assembly 23 is a rectangular parallelepiped structure, a rectangular parallelepiped case 214 may be selected. Certainly, the structure of the end cap 215 may be of various types, such as a plate-like structure or a hollow structure with an opening at one end. Exemplarily, in FIG. 3, the case 214 is a rectangular parallelepiped structure, the first direction X is the length direction of the battery cell 20, and the second direction Y is the height direction of the battery cell 20.

Certainly, it can be understood that the casing 21 is not limited to the above structure, and the casing 21 may also be other structures, for example, the casing 21 may include a case 214 and two end caps 215, where the case 214 is a hollow structure with openings 213 formed at opposite ends, one end cap 215 correspondingly covers one opening 213 of the case 214 and forms a sealed connection to form an accommodation space for accommodating the electrode assembly 23 and the electrolyte, that is, the case 214 has openings 213 formed on opposite sides, and the two end caps 215 respectively cover the two sides of the case 214 to close the corresponding openings 213.

The material of the casing 21 may also be of various types, such as copper, iron, aluminum, steel, or aluminum alloy.

The electrode sheets 23a of the electrode assembly 23 include a positive electrode sheet and a negative electrode sheet, and the electrode assembly 23 further includes a separator film (not shown in the figures), and the separator film is used to separate the positive electrode sheet and the negative electrode sheet. The positive electrode sheet, the negative electrode sheet, and the separator film, when stacked in a specific order, can form a laminated electrode assembly. The positive electrode sheet, the negative electrode sheet, and the separator film, when stacked in a specific order and wound, can form a wound electrode assembly.

It should be noted that one tab 232 of the electrode assembly 23 may be a component formed by stacking and connecting multiple tab segments formed in a region of the positive electrode sheet not coated with the positive electrode active material layer, forming a positive electrode tab 232, that is, one positive electrode tab may be a structure after stacking multiple tab segments formed in a region of the positive electrode current collector not coated with the positive electrode active material layer. The other tab 232 may be a component formed by stacking and connecting multiple tab segments formed in a region of the negative electrode sheet not coated with the negative electrode active material layer, forming a negative electrode tab 232, that is, one negative electrode tab may be a structure after stacking multiple tab segments formed in a region of the negative electrode current collector not coated with the negative electrode active material layer.

The regions of the positive electrode sheet of the electrode assembly 23 coated with the positive electrode active material layer, the regions of the negative electrode sheet coated with the negative electrode active material layer, and at least part of the separator film form the main body portion 231 of the electrode assembly 23. The tab 232 is provided at one end of the main body portion 231 along the second direction Y. Each electrode assembly 23 has two tabs 232 with opposite polarities, the two tabs 232 with opposite polarities may be disposed at the same end of the main body portion 231 along the second direction Y, and spaced apart along the third direction Z. The first direction X, the second direction Y, and the third direction Z are pairwise perpendicular.

In other embodiments, the two tabs 232 with opposite polarities may also be provided at opposite ends of the main body portion 231 along the second direction Y.

In some embodiments, the battery cell 20 further includes an electrode terminal 24. The electrode terminal 24 may be mounted on the casing 21 with an insulating arrangement, and the electrode terminal 24 is electrically connected to the electrode assembly 23 to output or input electric energy of the battery cell 20.

It should be noted that the electrode terminal 24 is insulatively mounted on the casing 21, that is, no electrical connection is formed between the electrode terminal 24 and the casing 21.

The battery cell 20 may include one electrode terminal 24 or two electrode terminals 24. Exemplarily, as shown in FIG. 3, the battery cell 20 includes two electrode terminals 24, and the two electrode terminals 24 are spaced apart along the length direction of the battery cell 20. Each electrode assembly 23 has two tabs 232, the two tabs 232 are spaced apart along the length direction of the battery cell 20, the two tabs 232 have opposite polarities, and the two electrode terminals 24 are respectively electrically connected to the two tabs 232 with opposite polarities of the electrode assembly 23 to achieve input or output of the positive and negative electrodes of the battery cell 20.

Exemplarily, the material of the electrode terminals 24 may also be of various types, such as copper, iron, aluminum, steel, or aluminum alloy.

The positions where the electrode terminals 24 are mounted on the casing 21 are multiple. Exemplarily, in FIG. 3, the two electrode terminals 24 are both mounted on the end cap 215 of the casing 21. Certainly, the structure of the battery cell 20 is not limited thereto. In the embodiment where the battery cell 20 includes two electrode terminals 24, the two electrode terminals 24 may both be mounted on the case 214 of the casing 21. Similarly, the two electrode terminals 24 may also be one electrode terminal 24 mounted on the case 214 of the casing 21 and the other electrode terminal 24 mounted on the end cap 215 of the casing 21. The wall portion of the casing 21 where the electrode terminals 24 are mounted is the second wall portion 212. The thickness direction, the height direction, and the length direction of the battery cell 20 are pairwise perpendicular.

In some embodiments, referring to FIG. 3, the battery cell 20 may further include two current collector members 25, where the two current collector members 25 are both disposed in the casing 21 and spaced apart along the length direction of the battery cell 20, and each current collector member 25 is used to connect one electrode terminal 24 and tabs 232 with the same polarity in the multiple electrode assemblies 23 to achieve electrical connection between the electrode terminal 24 and the electrode assembly 23, which helps reduce the assembly difficulty between the tabs 232 and the electrode terminal 24.

Exemplarily, the material of the current collector member 25 may also be of multiple types, such as copper, iron, aluminum, steel, or aluminum alloy.

The battery cell 20 may include one electrode assembly 23 or multiple electrode assemblies 23, and the multiple electrode assemblies 23 may be arranged along the first direction X. In the embodiment where the battery cell 20 includes multiple electrode assemblies 23, the multiple electrode assemblies 23 are arranged along the first direction X. The first direction X may be parallel to a thickness direction of the electrode assembly 23. In the embodiment where the electrode assembly 23 is a wound structure, the electrode assembly 23 includes bending regions and a flat region, where the bending regions are respectively provided at both ends of the flat region along the third direction Z, and the electrode sheets 23a and the first wall portion 211 are stacked along the first direction X, meaning that the electrode sheets 23a of the flat region and the first wall portion 211 are stacked along the first direction X. The first direction X, the second direction Y, and the third direction Z may be pairwise perpendicular. In the embodiment where the electrode assembly 23 is a wound structure, the second direction Y may be parallel to a winding axis direction of the electrode assembly 23.

The first direction X may be parallel to the thickness direction of the battery cell 20, and the first direction X is parallel to the thickness direction of the first wall portion 211. In the embodiment where the battery cell 20 includes multiple electrode assemblies 23, along the first direction X, the tab 232 of the electrode assembly 23 closest to the first wall portion 211 among all the electrode assemblies 23 is the first tab 233.

The binding portion 222 is provided in the casing 21. The binding portion 222 may be disposed on the electrode assembly 23 or may be disposed on the casing 21. The material of the binding portion 222 includes plastic, silicone, and the like.

The casing 21 of the battery cell 20 has a first wall portion 211 arranged with the electrode sheets 23a along the first direction X, the binding portion 222 abuts against a side, facing the first wall portion 211, of the first tab 233 of the electrode assembly 23 closest to the first wall portion 211 of the casing 21, providing a restraining force to the first tab 233, reducing the gap between layers of the first tab 233, thereby reducing the gap between the main body regions of the electrode sheets connected to the first tab 233. Consequently, the gap between the electrode sheets on a side, close to the first wall portion 211, of the electrode assembly 23 closest to the first wall portion 211 is minimized, which helps improve the cycling performance of the battery cell 20.

It should be noted that the electrode sheet main body region refers to the region of the electrode sheet having an active material layer.

In some embodiments, the electrode assembly 23 closest to the first wall portion 211 along the first direction X has a central plane A, the central plane A is perpendicular to the first direction X, and the first tab 233 is at least partially disposed on a side of the central plane A close to the first wall portion 211.

In the embodiment where the electrode assembly 23 is a wound structure, the central plane A of the electrode assembly 23 closest to the first wall portion 211 along the first direction X may be a plane passing through the winding axis of the electrode assembly 23 and perpendicular to the first direction X. In the embodiment where the electrode assembly 23 is a laminated structure, the central plane A of the electrode assembly 23 closest to the first wall portion 211 along the first direction X may be a plane at a middle position of the electrode assembly 23 in the first direction X.

The first tab 233 is at least partially disposed on a side, close to the first wall portion 211, of the central plane A of the electrode assembly 23 closest to the first wall portion 211, and the binding portion 222 and the first tab 233 are located on a portion of the surface of the central plane A facing the first wall portion 211 abutting against the first wall portion 211. This facilitates the abutment between the binding portion 222 and the first tab 233, enabling the binding portion 222 to provide a restraining force to the first tab 233, thereby helping reduce the gap between layers of the first tab 233, and further reducing the gap between the main body regions of the electrode sheets connected to the first tab 233. Consequently, the gap between the electrode sheets 23a on a side, close to the first wall portion 211, of the electrode assembly 23 closest to the first wall portion 211 is minimized, which helps improve the cycling performance of the battery cell 20.

The first tab 233 may be entirely disposed on a side, facing the first wall portion 211, of the central plane A of the electrode assembly 23 closest to the first wall portion 211. Alternatively, a part of the first tab 233 may be disposed on a side, facing the first wall portion 211, of the central plane A of the electrode assembly 23 closest to the first wall portion 211, and another part of the first tab 233 may be disposed on a side, away from the first wall portion 211, of the central plane A of the electrode assembly 23 closest to the first wall portion 211.

In some embodiments, along the first direction X, a gap is present between the first wall portion 211 and the main body portion 231 of the electrode assembly 23 closest to the first wall portion 211.

It can be understood that, along the first direction X, a gap is present between the first wall portion 211 and the main body portion 231 of the electrode assembly 23 closest to the first wall portion 211, which may mean that the surface of the first wall portion 211 and the main body portion 231 of the electrode assembly 23 closest to the first wall portion 211 do not directly contact, there is a space between the first wall portion 211 and the main body portion 231 of the electrode assembly 23 closest to the first wall portion 211, and the space between the first wall portion 211 and the main body portion 231 of the electrode assembly 23 closest to the first wall portion 211 may only have gas, such as air; or the space between the first wall portion 211 and the main body portion 231 of the electrode assembly 23 closest to the first wall portion 211 along the first direction X may be filled with other substances, such as electrolyte solution or buffer foam.

Along the first direction X, a gap is present between the first wall portion 211 and the main body portion 231 of the electrode assembly 23 closest to the first wall portion 211, providing expansion space for the electrode assembly 23, reducing the risk of explosion, fire, and other hazards in the battery cell 20, and improving the reliability of the battery cell 20.

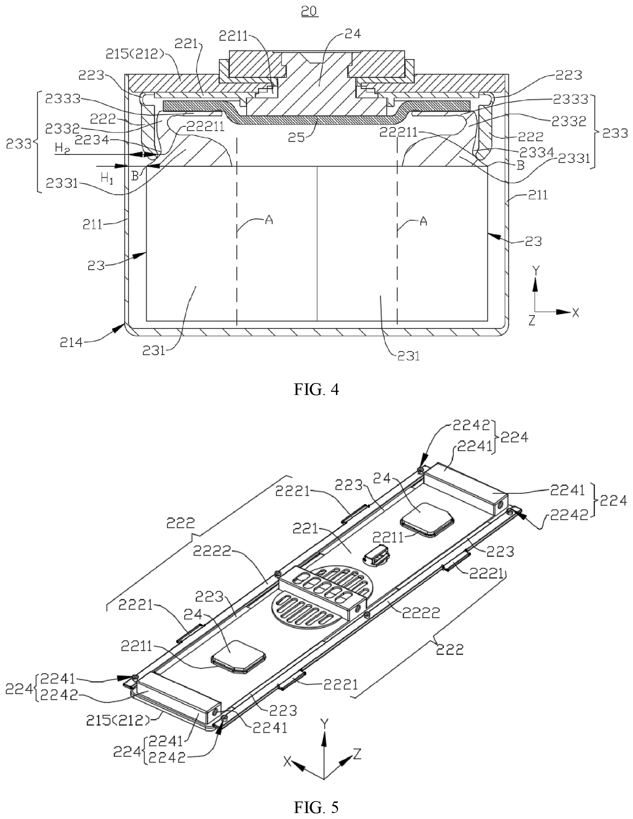

As shown in FIG. 4, in some embodiments, the first tab 233 includes multiple tab segments stacked along the first direction X, where a junction between the main body portion 231 and the tab segment closest to the first wall portion 211 among the multiple tab segments of the first tab 233 is a first position B; and the binding portion 222 has an abutting end 22211 that abuts against the first tab 233, and along the first direction X, a distance between an end of the abutting end 22211 away from the first wall portion 211 and the first wall portion 211 is greater than a distance between the first position B and the first wall portion 211.

It should be noted that, in the embodiment where the tab 232 is a structure formed by stacking multiple tab segments formed in a region of the current collector not coated with the active material layer, the first position B is the position where the tab segment closest to the first wall portion 211 among the multiple tab segments forming the first tab 233 is connected to the main body portion 231 in the first direction X.

As shown in FIG. 4, along the first direction X, the distance between the end of the abutting end 22211 away from the first wall portion 211 and the first wall portion 211 is H1, the distance between the first position B and the first wall portion 211 is H2, and H1>H2.

Along the first direction X, the distance between the end of the abutting end 22211 of the binding portion 222 away from the first wall portion 211 and the first wall portion 211 is greater than the distance between the first position B and the first wall portion 211, enabling the binding portion 222 to press the first tab 233 along a direction away from the first wall portion 211 in the first direction X, thereby reducing the gap between layers of the first tab 233, and further reducing the gap between the main body regions of the electrode sheets connected to the first tab 233. Consequently, the gap between the electrode sheets 23a on a side, close to the first wall portion 211, of the electrode assembly 23 closest to the first wall portion 211 is minimized, which helps improve the cycling performance of the battery cell 20.

In some embodiments, the surface of the abutting end 22211 that abuts against the first tab 233 is an arc surface.

The surface of the abutting end 22211 that abuts against the first tab 233 may be a circular arc surface. The radius of the surface of the abutting end 22211 that abuts against the first tab 233 may be designed according to practical requirements, for example, the radius of the surface of the abutting end 22211 that abuts against the first tab 233 is 1 mm.

The surface of the abutting end 22211 that abuts against the first tab 233 is a circular arc surface, which can lower the risk of damaging or injuring the first tab 233 when the abutting end 22211 abuts against the first tab 233.

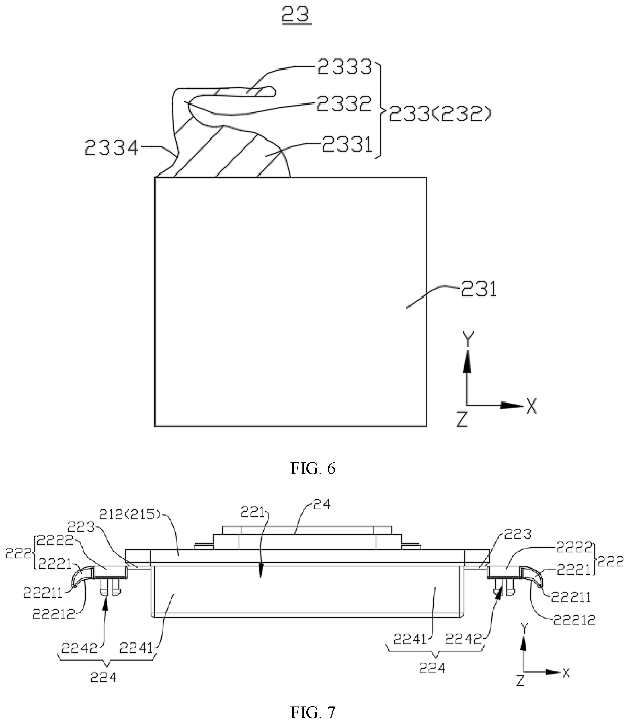

As shown in FIG. 4 and FIG. 6, in some embodiments, the casing 21 has a second wall portion 212, the second wall portion 212 and the tabs 232 are arranged along the second direction Y, the battery cell 20 includes an electrode terminal 24, and the electrode terminal 24 is disposed on the second wall portion 212; the first tab 233 includes a first tab root 2331, a first bending portion 2332, and a first connection portion 2333, where the first tab root 2331 is connected to the main body portion 231, the first bending portion 2332 connects the first tab root 2331 and the first connection portion 2333, and the first connection portion 2333 is electrically connected to the electrode terminal 24; and the binding portion 222 abuts against a surface of the first tab root 2331 facing the first wall portion 211.

The second wall portion 212 may be the end cap 215. In the embodiment where the casing 21 includes a case 214 and two end caps 215, one of the two end caps 215 may serve as the second wall portion 212, and the first wall portion 211 is one side wall of the case 214.

The first tab root 2331 is a portion of the first tab 233 connected to the electrode sheet main body region of the corresponding electrode sheet 23a, and along the second direction Y, the first tab root 2331 is the portion of the first tab 233 closest to the electrode sheet main body region. The first bending portion 2332 is the region where the first tab 233 is bent. The first connection portion 2333 is a portion formed after the first tab 233 is bent, and along the second direction Y, the first connection portion 2333 is the portion of the first tab 233 farthest from the electrode sheet main body region. In other words, the first connection portion 2333 is the portion of the first tab 233 closest to the second wall portion 212. The first connection portion 2333 may be directly connected to the electrode terminal 24 to achieve electrical connection between the first connection portion 2333 and the electrode terminal 24. The first connection portion 2333 may also be indirectly connected to the electrode terminal 24, for example, the first connection portion 2333 is electrically connected to the electrode terminal 24 via the current collector member 25, thereby achieving electrical connection between the first connection portion 2333 and the electrode terminal 24.

The binding portion 222 abuts against the surface of the first tab root 2331 facing the first wall portion 211, and the restraining force exerted by the binding portion 222 on the first tab 233 acts on the first tab root 2331.

The binding portion 222 abuts against the surface of the first tab root 2331 facing the first wall portion 211, such that the abutting position of the binding portion 222 against the first tab 233 is closer to the electrode sheet main body region connected to the first tab 233, thereby better restraining the electrode sheet main body region, thus better reducing the gap between the electrode sheets on a side, close to the first wall portion 211, of the electrode assembly 23 closest to the first wall portion 211, which helps improve the cycling performance of the battery cell 20.

In other embodiments, the binding portion 222 may also abut against other positions of the surface of the first tab 233 facing the first wall portion 211, such as the binding portion 222 abuts against the surface of the first bending portion 2332 facing the first wall portion 211.

In some embodiments, the battery cell 20 further includes an insulating layer (not shown in the figures), where the insulating layer is at least partially disposed on a surface of the first tab root 2331.

Each surface of the region of the formed first tab 233 not coated with the active material layer may be provided with an insulating layer, or only the surface of the region closest to the first wall portion 211 among the multiple regions stacked along the first direction X of the formed first tab 233 not coated with the active material layer may be provided with an insulating layer.

In the embodiment where the insulating layer is at least partially disposed on the surface of the first tab root 2331, the binding portion 222 may directly abut against the surface of the first tab root 2331 facing the first wall portion 211, achieving direct abutting between the binding portion 222 and the first tab root 2331. The binding portion 222 may also abut against the insulating layer, achieving indirect abutment of the binding portion 222 against the surface of the first tab root 2331.

The insulating layer may be entirely disposed on the surface of the first tab root 2331. A part of the insulating layer may be disposed on the surface of the first tab root 2331, and another part may be disposed on the main body portion 231. A part of the insulating layer may be disposed on the surface of the first tab root 2331, a part may be disposed on the main body portion 231, and another part may be disposed on the surface of other positions of the first tab 233, such as the surface of the first bending portion 2332 of the first tab 233.

The material of the insulating layer may be a ceramic coating, a rubber layer, and the like.

The battery cell 20 further includes an insulating layer at least partially disposed on the surface of the first tab root 2331, which helps improve the strength of the first tab 233 and reducing the risk of the first tab 233 being torn.

As shown in FIG. 4, FIG. 5, FIG. 7, and FIG. 8, in some embodiments, the binding portion 222 includes an abutting section 2221 and an extending section 2222, where the extending section 2222 is at least partially disposed between the first tab 233 and the first wall portion 211, and along a direction from the tab 232 toward the main body portion 231, the abutting section 2221 protrudes from one end of the extending section 2222, and the abutting section 2221 abuts against the first tab root 2331.

Along the direction from the tab 232 toward the main body portion 231, the abutting section 2221 protrudes from one end of the extending section, and along the third direction Z, the size of the abutting section 2221 is smaller than the size of the extending section 2222. The first direction X, the second direction Y, and the third direction Z are pairwise perpendicular. The third direction Z may be parallel to the length direction of the battery cell 20. The abutting section 2221 abuts against the surface of the first tab root 2331 facing the first wall portion 211.

The binding portion 222 includes an abutting section 2221 and an extending section 2222, the extending section 2222 is at least partially disposed between the first tab 233 and the first wall portion 211, the abutting section 2221 protrudes from one end, and the abutting section 2221 abuts against the first tab root 2331, which can reduce the space occupied by the binding portion 222, facilitate abutment against the first tab 233, and lower the risk of positional interference between the first tab 233 and the binding portion 222.

In some embodiments, the abutting section 2221 protrudes from the extending section 2222 along a direction away from the first wall portion 211 in the first direction X.

Along the first direction X, the surface of the abutting section 2221 facing the first wall portion 211 may be coplanar with the surface of the extending section 2222 facing the first wall portion 211. Along the first direction X, the distance between the surface of the abutting section 2221 away from the first wall portion 211 and the first wall portion 211 is greater than the distance between the surface of the extending section 2222 away from the first wall portion 211 and the first wall portion 211, such that the abutting section 2221 protrudes from the extending section 2222 along a direction away from the first wall portion 211 in the first direction X.

The abutting section 2221 protrudes from the extending section 2222 along a direction away from the first wall portion 211 in the first direction X, such that the abutting section 2221 is closer to the first tab 233 in the first direction X, facilitating the abutting section 2221 to abut against the first tab 233.

In some embodiments, the electrode assembly 23 closest to the first wall portion 211 along the first direction X has a central plane A, the central plane A is perpendicular to the first direction X, and the first bending portion 2332 is located on a side of the central plane A facing the first wall portion 211.

It can be understood that after the multiple tab segments forming the first tab 233 are gathered, and then bent toward the first wall portion 211 to form the first bending portion 2332 on a side, facing the first wall portion 211, of the central plane A of the electrode assembly 23 closest to the first wall portion 211. It can also be understood that the multiple tab segments forming the first tab 233 are gathered in a direction toward the first wall portion 211 and bent in a direction toward the first wall portion 211.

The first bending portion 2332 of the first tab 233 is located on a side, facing the first wall portion 211, of the central plane A of the electrode assembly 23 closest to the first wall portion 211. It can be understood that the multiple tab segments of the first tab 233 are gathered in a direction toward the first wall portion 211, reducing the distance between the surface of the first tab 233 facing the first wall portion 211 and the first wall portion 211, and facilitating the abutment of the binding portion 222 against the first tab 233.

The abutting section 2221 abuts against the first tab root 2331, and the abutting section 2221 may abut against the first tab root 2331 at any position. For example, the surface of the abutting section 2221 facing the first tab 233 abuts against the first tab root 2331. As another example, in some embodiments, the binding portion 222 includes an extending section 2222 and an abutting section 2221, the abutting section 2221 is bent from the extending section 2222 in a direction toward the first tab 233, and an end of the abutting section 2221 away from the extending section 2222 forms an abutting end 22211, and the abutting end 22211 abuts against the first tab root 2331.

The abutting end 22211 is an end of the abutting section 2221 away from the extending section 2222. The abutting section 2221 is bent in a direction toward the first tab 233. It can be understood that the abutting section 2221 is bent from the extending section 2222 along a curve in a direction toward the first tab 233, forming an abutting section 2221 with a hook-like structure, and the hook portion of the hook-like structure faces the first tab 233.

The abutting section 2221 is bent in a direction toward the first tab 233, facilitating the abutting section 2221 to abut against the first tab 233. The abutting section 2221 is bent in a direction toward the first tab 233, such that an end of the abutting section 2221 away from the extending section 2222 forms an abutting end 22211 that abuts against the first tab root 2331, that is, an end of the abutting section 2221 away from the extending section 2222 abuts against the first tab root 2331, which not only can provide a better restraining force to the first tab 233, but also lower the risk of excessive contact area between the first tab 233 and the abutting section 2221, which would otherwise interfere with the connection between the first tab 233 and other structures.

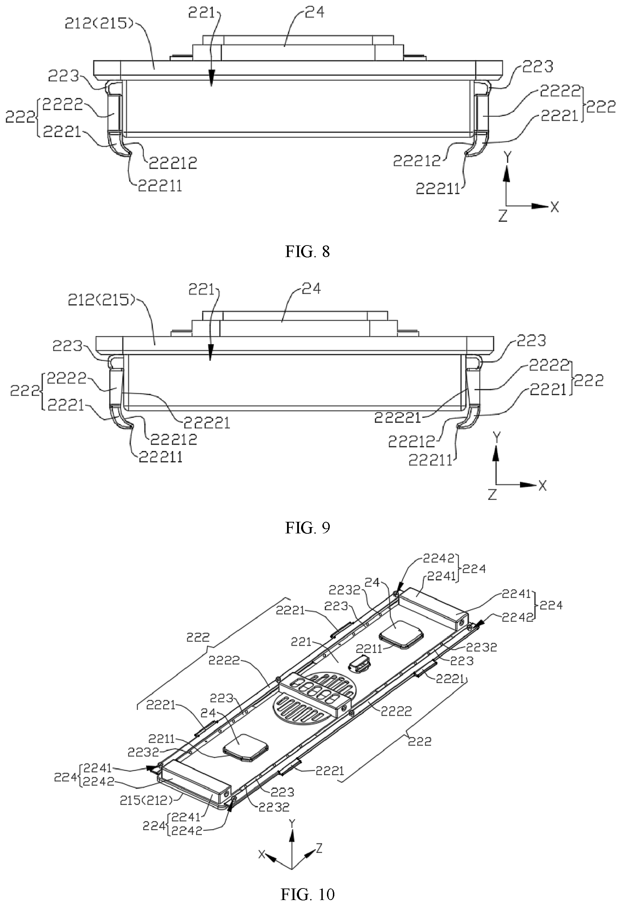

As shown in FIG. 7 and FIG. 8, in some embodiments, an end of the abutting section 2221 away from the extending section 2222 forms an abutting end 22211, the abutting end 22211 abuts against the first tab 233, the abutting section 2221 has a first surface 22212 facing the first tab 233, the first surface 22212 extends to the abutting end 22211, and the first surface 22212 is an arc surface.

The abutting section 2221 is bent toward the first tab 233, such that the first surface 22212 of the abutting section 2221 facing the first tab 233 forms an arc surface. Exemplarily, the arc surface may have a radius of 1 mm. The abutting end 22211 may abut against the surface of the first tab root 2331 of the first tab 233 facing the first wall portion 211.

An end of the abutting section 2221 away from the extending section 2222 forms an abutting end 22211 that abuts against the first tab 233, that is, an end of the abutting section 2221 away from the extending section 2222 is capable of abutting against the first tab 233, which not only can provide a better restraining force to the first tab 233, but also lower the risk of excessive contact area between the first tab 233 and the abutting section 2221, which would otherwise interfere with the connection between the first tab 233 and other structures. The first surface 22212 is an arc surface, which facilitates the abutting section 2221 to form a structure bent in a direction toward the first tab 233, simplifies the manufacturing and molding the abutting section 2221, and also facilitates the abutment of the abutting section 2221 against the first tab 233.

As shown in FIG. 9, in some embodiments, the extending section 2222 has a second surface 22221 facing the first tab 233, the first surface 22212 and the second surface 22221 are connected, and along the direction from the tab 232 toward the main body portion 231, the distance between the second surface 22221 and the first wall portion 211 in the first direction X increases gradually.

Along the direction from the tab 232 toward the main body portion 231, the distance between the second surface 22221 and the first wall portion 211 in the first direction X increases gradually. The second surface 22221 may be an arc surface, an inclined surface, or the like. As shown in FIG. 9, the second surface 22221 is an inclined surface, and along the direction from the second wall portion 212 toward the main body portion 231, the second surface 22221 gradually inclines in a direction away from the first tab 233 and extends to an end of the first surface 22212 away from the abutting end 22211.

The extending section 2222 has a second surface 22221 facing the first tab 233, and along the direction from the tab toward the main body portion 231, the distance between the second surface 22221 and the first wall in the first direction X increases gradually, which lowers the risk that the extending section 2222 excessively compresses the first tab 233 and causes cracking of the first tab 233.

In some embodiments, the electrode assembly 23 closest to the first wall portion 211 includes multiple first tabs 233, where the multiple first tabs 233 are arranged along the third direction Z; and the extending section 2222 is provided with multiple abutting sections 2221, where the multiple abutting sections 2221 are spaced apart along the third direction Z, one first tab 233 corresponds to at least one abutting section 2221, and the first direction X, the second direction Y, and the third direction Z are non-coplanar and intersect with each other pairwise.

In this embodiment, the first direction X, the second direction Y, and the third direction Z are pairwise perpendicular.

The electrode assembly 23 closest to the first wall portion 211 includes multiple first tabs 233 spaced apart along the third direction Z, where one end of the extending section 2222 is provided with multiple abutting sections 2221 spaced apart along the third direction Z, and the abutting sections 2221 and the first tabs 233 are provided in one-to-one correspondence.

In this embodiment, as shown in FIG. 3 and FIG. 5, each electrode assembly 23 includes two tabs 232 spaced apart along the third direction Z. The electrode assembly 23 closest to the first wall portion 211 includes two first tabs 233 spaced apart along the third direction Z. One end of the extending section 2222 is provided with two abutting sections 2221 spaced apart along the third direction Z, and the two abutting sections 2221 respectively abut against the surfaces of the two first tabs 233 facing the first wall portion 211.

In other embodiments, if the electrode assembly 23 closest to the first wall portion 211 includes three or more first tabs 233 spaced apart along the third direction Z, one end of the extending section 2222 is provided with three or more abutting sections 2221 spaced apart along the third direction Z.

The electrode assembly 23 closest to the first wall portion 211 includes multiple first tabs 233, the extending section 2222 is provided with multiple abutting sections 2221, and each abutting section 2221 abuts against one first tab 233, which can provide a better restraining force for each first tab 233.

In other embodiments, one abutting section 2221 may also abut against surfaces of multiple first tabs 233 facing the first wall portion 211 at the same time.

In some embodiments, the casing 21 has a second wall portion 212, the second wall portion 212 and the first wall portion 211 are adjacently arranged and connected, and the second wall portion 212 and the tabs 232 are arranged along the second direction Y; and the battery cell 20 further includes an insulating body 221, the insulating body 221 is disposed on a side of the tabs 232 facing the second wall portion 212 to insulate and isolate the second wall portion 212 and the tabs 232, and the binding portion 222 is connected to the insulating body 221.

The battery cell 20 includes an insulating body 221. The insulating body 221 is disposed on a side of the tabs 232 away from the main body portion 231, and the insulating body 221 is located between the second wall portion 212 and the tabs 232 to insulate and separate the tabs 232 and the second wall portion 212. In this embodiment, the end cap 215 of the casing 21 is the second wall portion 212, the insulating body 221 is accordingly located between the end cap 215 and the tabs 232 to insulate and separate the end cap 215 and the tabs 232. In the embodiment where the electrode terminal 24 is provided on the end cap 215, the insulating body 221 avoids the electrode terminal 24. As shown in FIG. 4 and FIG. 5, the insulating body 221 is provided with an avoidance hole 2211, and the electrode terminal 24 passes through the avoidance hole 2211 to be electrically connected to the tabs 232. In some embodiments, the insulating body 221 may also be referred to as a lower plastic part.

In the embodiment where the binding portion 222 includes an extending section 2222 and an abutting section 2221, the insulating body 221 is connected to one end of the extending section 2222 along the second direction Y, and the abutting section 2221 is connected to the other end of the extending section 2222 along the second direction Y, that is, the abutting section 2221 is connected to a section of the extending section 2222 away from the insulating body 221 along the second direction Y. The size of the extending section 2222 along the third direction Z may be the same as the size of the insulating body 221 along the third direction Z.

One end of the extending section 2222 away from the insulating body 221 is provided with two abutting sections 2221 spaced apart along the third direction Z, and the two abutting sections 2221 respectively abut against the surfaces of the two first tabs 233 facing the first wall portion 211.

In other embodiments, if the electrode assembly 23 closest to the first wall portion 211 includes three or more first tabs 233 spaced apart along the third direction Z, one end of the extending section 2222 away from the insulating body 221 is provided with three or more abutting sections 2221 spaced apart along the third direction Z.

The extending section 2222 may be directly connected to the insulating body 221 or indirectly connected to the insulating body 221. The extending section 2222 may partially extend between the first wall portion 211 and the first tab 233 along the second direction Y to reduce the space occupied by the extending section 2222 between the first tab 233 and the first wall portion 211, thereby reducing the risk of the extending section 2222, which would otherwise interfere with the connection between the first tab 233 and other structures. The extending section 2222 may also entirely extend between the first wall portion 211 and the first tab 233 along the second direction Y.

The battery cell 20 further includes an insulating body 221, where the insulating body 221 is provided between a side of the tabs 232 facing the second wall portion 212 and the second wall portion 212, to lower the risk of internal short-circuiting of the battery cell 20 and improve the reliability of the battery cell 20.

As shown in FIG. 7, FIG. 8, and FIG. 9, in some embodiments, the binding portion 222 includes an extending section 2222 and an abutting section 2221, the extending section 2222 is at least partially disposed between the first tab 233 and the first wall portion 211, the abutting section 2221 protrudes from one end of the extending section 2222, and the abutting section 2221 abuts against the first tab 233; the battery cell 20 further includes a second bending portion 223, and the second bending portion 223 connects the insulating body 221 and the binding portion 222.

One end of the second bending portion 223 is connected to the insulating body 221, and the other end of the second bending portion 223 is connected to the binding portion 222. When at least part of the binding portion 222 is located between the first wall portion 211 and the first tab 233, the second bending portion 223 is in an arc-shaped bent state. When the binding portion 222 is not located between the first wall portion 211 and the first tab 233, the second bending portion 223 may be in a straight state (as shown in FIG. 7). As shown in FIG. 4 and FIG. 8, by bending the binding portion 222 relative to the insulating body 221 around an axis parallel to the third direction Z at the second bending portion 223, the second bending portion 223 is in an arc-shaped bent state, and the binding portion 222 may be located between the first wall portion 211 and the first tab 233 and abut against the surface of the first tab 233 facing the first wall portion 211.

The second bending portion 223 may be connected to any part of the binding portion 222, for example, the second bending portion 223 is connected to the abutting section 2221 of the binding portion 222, or the second bending portion 223 is connected to the extending section 2222 of the binding portion 222.

The extending section 2222 may be directly connected to the insulating body 221 or indirectly connected to the insulating body 221. As shown in FIG. 5, FIG. 7, FIG. 8, and FIG. 9, in some embodiments, the battery cell 20 further includes a second bending portion 223, and the second bending portion 223 connects the insulating body 221 and the extending section 2222.

One end of the second bending section is connected to an edge of the insulating body 221 along the first direction X, and the other end of the second bending section is connected to an end of the extending section 2222 away from the abutting section 2221.

The extending section 2222 and the insulating body 221 are indirectly connected via the second bending portion 223. The second bending portion 223 is an arc-shaped structure. In some embodiments, the binding portion 222 may be bent relative to the insulating body 221 at the second bending portion 223, such that the binding portion 222 can be located between the first tab 233 and the first wall portion 211 and form the second bending portion 223.

The insulating body 221 and the extending section 2222 are connected via the second bending portion 223, making the insulating body 221 and the binding portion 222 able to form a single unit, which can improve the stability of the insulating body 221 and the binding portion 222 inside the battery cell 20, thereby improving the reliability of the insulating body 221 and the binding portion 222.

In some embodiments, a thickness of the insulating body 221 and a thickness of the extending section 2222 are both greater than a thickness of the second bending portion 223.

The thickness of the insulating body 221 is the size of the insulating body 221 along the second direction Y. The thickness of the insulating body 221 may be the minimum thickness of the insulating body 221 along the second direction Y. The thickness of the extending section 2222 is the size of the extending section 2222 along the first direction X.

If the thickness of the insulating body 221 and the thickness of the extending section 2222 are both greater than the thickness of the second bending portion 223, then the strength of the insulating body 221 and the strength of the extending section 2222 are both greater than the strength of the second bending portion 223. This facilitates the bending of the binding portion 222 relative to the insulating body 221 at the second bending portion 223 to between the first wall portion 211 and the first tab 233.

The thickness of the insulating body 221 and the thickness of the extending section 2222 are both greater than the thickness of the second bending portion 223, making the strength of the insulating body 221 and the strength of the extending section 2222 both greater than the strength of the second bending section, facilitating the bending and forming of the extending section 2222 relative to the insulating body 221 at the second bending portion 223, thereby facilitating the manufacturing and molding of the insulating body 221 and the binding portion 222 into an integral structure.

In some embodiments, the thickness of the abutting section 2221 may be greater than the thickness of the second bending portion 223 to improve the strength of the abutting section 2221, facilitating the abutting section 2221 to better restrain the first tab 233.

As shown in FIG. 10, in some embodiments, the second bending portion 223 is provided with a through hole 2232, and the through hole 2232 penetrates both sides of the second bending portion 223 in the thickness direction.

The shape of the through hole 2232 may be of various types, such as a circular hole, a bar-shaped hole, an elliptical hole, and a polygonal hole.

The number of the through holes 2232 may be one or multiple. In the embodiment where the number of the through holes 2232 is multiple, the multiple through holes 2232 are spaced apart on the second bending portion 223.

The second bending portion 223 is provided with a through hole 2232, and the molding method of the through hole 2232 is simple and convenient. This in turn simplifies the method of reducing the strength of the second bending portion 223, making the second bending portion 223 easier to bend, and thus facilitating the forming of the insulating body 221, the binding portion 222, and the second bending portion 223. The provision of the through hole 2232 also helps reduce the weight of the battery cell 20.

In some embodiments, a groove (not shown in the figures) is provided on at least one surface of the second bending portion 223 along the thickness direction of the second bending portion 223.

The groove is recessed from the surface of the second bending portion 223 in the thickness direction, and the depth of the recess is less than the thickness of the second bending portion 223. Along the thickness direction of the second bending portion 223, the groove may be provided on one side of the second bending portion 223, or grooves may be provided on both opposite sides of the second bending portion 223.

The number of the grooves may be one or multiple.

The second bending portion 223 is provided with a groove on at least one surface in the thickness direction of the second bending portion 223, thereby making the method of reducing the strength of the second bending portion 223 simple and convenient.

The second bending portion 223 may be provided with only through holes or only grooves. The second bending portion 223 may alternatively be provided with both through holes 2232 and grooves.

The number of the second bending portions 223 may be one, that is, the insulating body 221 and the extending section 2222 are connected via one second bending portion 223, making the structure of the battery cell 20 simpler. In the embodiment where the number of the second bending portions 223 is one, along the third direction Z, the size of the second bending portion 223 may be smaller than the size of the insulating body 221, or the size of the second bending portion 223 may be the same as the size of the insulating body 221.

As shown in FIG. 10, in some embodiments, the battery cell 20 includes multiple second bending portions 223, the multiple second bending portions 223 are spaced apart along the third direction Z, and the first direction X, the second direction Y, and the third direction Z are non-coplanar and intersect with each other pairwise.

Each second bending portion 223 connects the insulating body 221 and the extending section 2222, and the extending section 2222 and the insulating body 221 are connected via multiple second bending portions 223.

The battery cell 20 includes multiple second bending portions 223 spaced apart along the third direction Z, making the connection stability between the insulating body 221 and the extending section 2222 better.

The second bending portion 223 may be connected to a section of the extending section 2222 of the binding portion 222 away from the abutting section 2221, or may be connected to a middle region of the extending section 2222. Certainly, the second bending section may also be connected to the abutting section 2221 of the binding portion 222.

The insulating body 221 and the binding portion 222 are connected via the second bending portion 223, facilitating manufacturing and molding.

In some embodiments, the binding portion 222 and the insulating body 221 are integrally formed.

The binding portion 222 and the insulating body 221 being integrally formed means that the binding portion 222 and the insulating body 221 are fabricated via an integral molding process. The integral molding method may be injection molding, stamping, bending, or the like.

In the embodiment where the battery cell 20 further includes a second bending portion 223, the insulating body 221, the binding portion 222, and the second bending portion 223 are integrally formed, for example, the insulating body 221, the binding portion 222, and the second bending portion 223 are formed by bending a single plate. Exemplarily, as shown in FIG. 7, before the binding portion 222, the insulating body 221, and the second bending portion enter the casing 21, the second bending portion 223 is a plate-like structure extending straight, and the insulating body 221 and the binding portion 222 are respectively connected to both ends of the second bending portion 223 along the first direction X. By bending the binding portion 222 relative to the insulating body 221 about an axis parallel to the third direction Z at the second bending portion 223, the second bending portion 223 is in an arc-shaped bent state, forming the state shown in FIG. 8. After the assembly into the casing 21, the binding portion 222 can be located between the first wall portion 211 and the first tab 233 and abut against the surface of the first tab 233 facing the first wall portion 211.

The binding portion 222 and the insulating body 221 are integrally formed, which facilitates the forming of the binding portion and the insulating body into an integral structure and ensures that the integral structure formed by the binding portion and the insulating body has better strength.

In other embodiments, the binding portion 222 and the insulating body 221 may also be separately provided and then connected into a single unit. In the embodiment where the battery cell 20 includes the binding portion 222 and the insulating body 221 but does not include the second bending portion, the binding portion 222 and the insulating body 221 may be detachably connected, such as bolt connection or snap connection. The binding portion 222 and the insulating body 221 may be fixedly connected, such as welding connection and adhesive connection. In the embodiment where the battery cell 20 further includes the second bending portion 223, the insulating body 221, the binding portion 222, and the second bending portion 223 may be separately provided and then connected into a single unit. The second bending portion 223 and the insulating body 221 may be detachably connected, such as bolt connection and snap connection. The second bending portion 223 and the insulating body 221 may be fixedly connected, such as welding connection and adhesive connection. The second bending portion 223 and the binding portion 222 may be detachably connected, such as bolt connection and snap connection. The second bending portion 223 and the binding portion 222 may be fixedly connected, such as welding connection and adhesive connection.

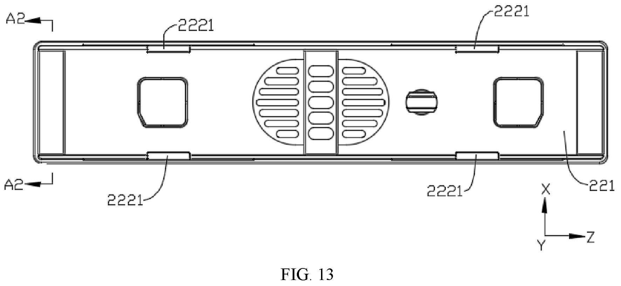

As shown in FIG. 10 to FIG. 14, in some embodiments, the battery cell 20 includes a locking structure 224, where the locking structure 224 is adapted to lock the binding portion 222 and the insulating body 221 to restrain the binding portion 222 from flipping relative to the insulating body 221 in a direction toward the first wall portion 211.

During the charging and discharging process of the battery cell 20, gas generation inside the battery cell 20 may cause increased air pressure between the electrode sheets of the electrode assembly 23, and thus generate a driving force on the binding portion 222 toward the first wall portion 211, causing the binding portion 222 to flip around the junction between the binding portion 222 and the insulating body 221, thereby weakening the restraining effect of the binding portion 222 on the first tab 233 or causing the binding portion 222 to lose the restraining effect on the first tab 233.

The insulating body 221 and one binding portion 222 may be locked via one locking structure 224, making the structure of the battery cell 20 simpler. The insulating body 221 and one binding portion 222 may also be locked via multiple locking structures 224 to further improve the locking stability. In the embodiment where the insulating body 221 and one binding portion 222 are locked via multiple locking structures 224, the multiple locking structures 224 may be spaced apart along the third direction Z.

The locking structure 224 may be provided at any position between the binding portion 222 and the insulating body 221. In this embodiment, when viewed along the second direction Y, the projection of the abutting section 2221 does not overlap with the projection of the locking structure 224. When viewed along the second direction Y, the projection of the first tab 233 does not overlap with the projection of the locking structure 224. When viewed along the second direction Y, the projection of the first tab 233 is located between projections of two adjacent locking structures 224. When viewed along the second direction Y, the projection of the abutting section 2221 is located between two adjacent locking structures 224. When viewed along the first direction X, the projection of the first tab 233 and the projection of the locking structure 224 do not overlap, and the projection of the abutting section 2221 and the projection of the locking structure 224 do not overlap.

The binding portion 222 and the insulating body 221 are locked via the locking structure 224 to restrain the binding portion 222 from flipping relative to the insulating body 221 in a direction toward the first wall portion 211, to lower the risk of the binding portion 222 detaching from the first tab 233, such that the binding portion 222 can stably restrain the first tab 233, thereby reducing the gap between the electrode sheets of the electrode assembly 23 that are proximal to the first wall portion 211, which helps improve the cycling performance of the battery cell 20.

In some embodiments, the locking structure 224 includes a first locking portion 2241 and a second locking portion 2242, and the first locking portion 2241 is configured to be in snap fit with the second locking portion 2242 to lock the insulating body 221 and the binding portion 222.

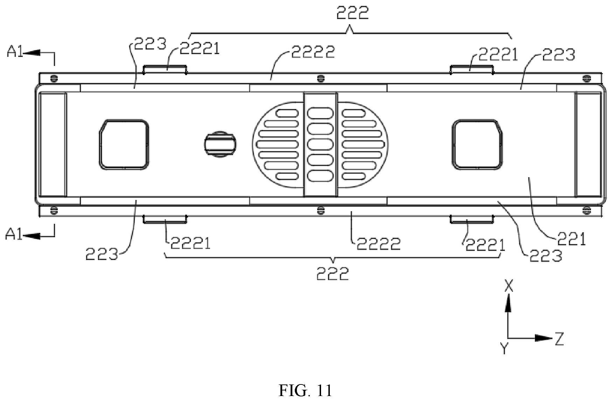

As shown in FIG. 11 to FIG. 14, in some embodiments, the first locking portion 2241 is provided with a locking hole 22411, and the second locking portion 2242 is snapped into the locking hole 22411.

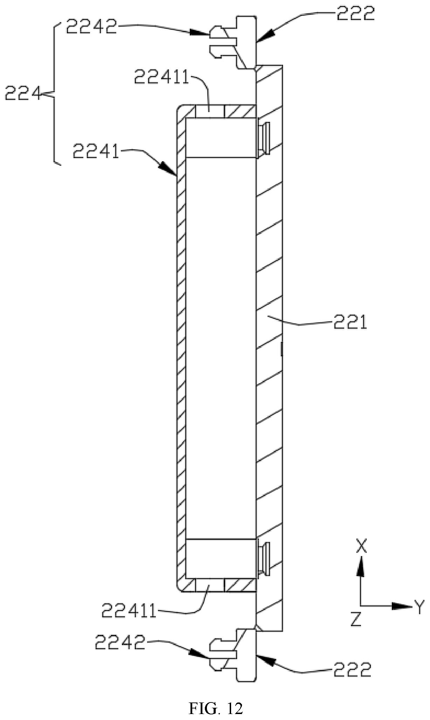

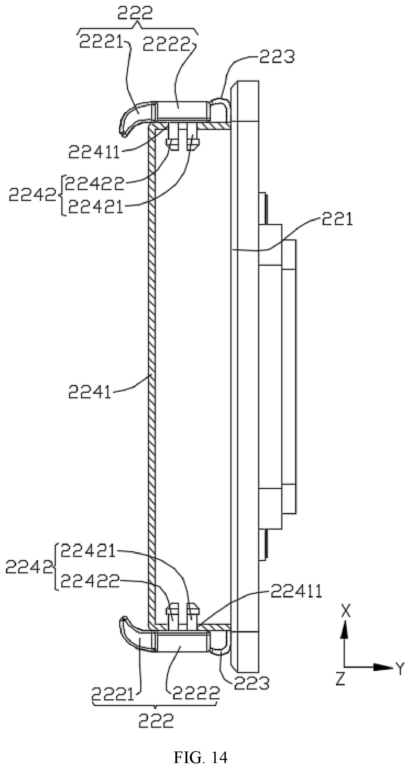

The locking hole 22411 is provided at one end of the first locking portion 2241 along the first direction X. The axis direction of the locking hole 22411 is parallel to the first direction X. The end of the locking hole 22411 closest to the first wall portion 211 is the entrance of the locking hole 22411 for inserting the second locking portion 2242. The second locking portion 2242 may be an elastic member deformable along the radial direction of the locking hole 22411. As shown in FIG. 12, when the binding portion 222 is not flipped relative to the insulating body 221 around an axis parallel to the third direction Z, the axis direction of the locking hole 22411 is parallel to the first direction X, and the extending direction of the second locking portion 2242 is parallel to the second direction Y. As shown in FIG. 14, after the binding portion 222 is flipped relative to the insulating body 221 around an axis parallel to the third direction Z, before the second locking portion 2242 is snapped into the locking hole 22411, the second locking portion 2242 is deformed along the radial direction of the locking hole 22411, the deformed second locking portion 2242 is inserted into the locking hole 22411, the force driving the deformation of the second locking portion 2242 is removed, the second locking portion 2242 restores its original shape, achieving snapping with the first locking portion 2241. The axis direction of the locking hole 22411 is parallel to the first direction X, and the extending direction of the second locking portion 2242 is parallel to the first direction X.

The locking hole 22411 may be a constant diameter hole or a stepped hole. FIG. 11 to FIG. 14 show the locking hole 22411 as a constant diameter hole.

The first locking portion 2241 is provided with a locking hole 22411, and the second locking portion 2242 is snapped into the locking hole 22411, which not only facilitates the locking of the insulating body 221 and the binding portion 222, but also makes the structure of the locking structure 224 simple.

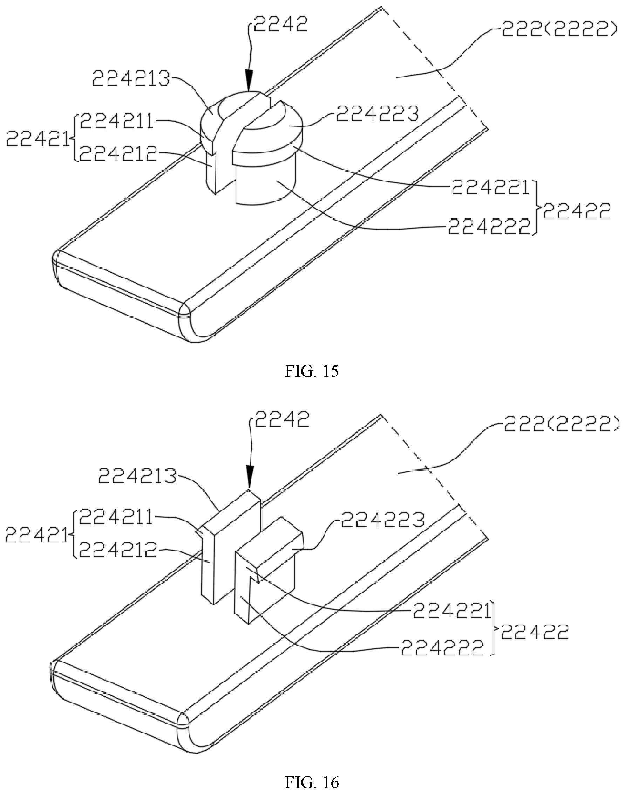

As shown in FIG. 15 and FIG. 16, in some embodiments, the second locking portion 2242 includes a first elastic portion 22421 and a second elastic portion 22422 arranged at relative intervals, and the second locking portion 2242 is configured to be insertable into the locking hole 22411 when the first elastic portion 22421 and the second elastic portion 22422 approach each other.

The arrangement direction of the first elastic portion 22421 and the second elastic portion 22422 is parallel to the radial direction of the locking hole 22411. One end of the first elastic portion 22421 is connected to the binding portion 222, and one end of the second elastic portion 22422 is connected to the binding portion 222. The first elastic portion 22421 and the second elastic portion 22422 approaching each other may be the first elastic portion 22421 and the second elastic portion 22422 deforming in a direction approaching each other, facilitating the insertion of the second locking portion 2242 into the locking hole 22411. The junction of the first elastic portion 22421 and the binding portion 222, and the junction of the second elastic portion 22422 and the binding portion 222 may not approach each other.

As shown in FIG. 15 and FIG. 16, the first elastic portion 22421 includes a first limiting portion 224211 and a first body 224212, one end of the first body 224212 is connected to the binding portion 222, the first limiting portion 224211 is provided at an end of the first body 224212 away from the binding portion 222, and the first limiting portion 224211 protrudes from an outer surface of the first body 224212 away from the second elastic portion 22422. The second elastic portion 22422 includes a second limiting portion 224221 and a second body 224222, one end of the second body 224222 is connected to the binding portion 222, the second limiting portion 224221 is provided at an end of the second body 224222 away from the binding portion 222, and the second limiting portion 224221 protrudes from an outer surface of the second body 224222 away from the first elastic portion 22421. The first limiting portion 224211 and the second limiting portion 224221 are used to abut against the first locking portion 2241 after the second locking portion 2242 is inserted into the locking hole 22411, thereby achieving snapping between the first locking portion 2241 and the second locking portion 2242.

Continue to refer to FIG. 15 and FIG. 16. In some embodiments, the outer peripheral surface of the first limiting portion 224211 includes a first guide surface 224213, the first guide surface 224213 extends to an end of the first limiting portion 224211 away from the binding portion 222, the outer peripheral surface of the second limiting portion 224221 includes a second guide surface 224223, and the second guide surface 224223 extends to an end of the second limiting portion 224221 away from the binding portion 222. The first guide surface 224213 and the second guide surface 224223 may cooperate with the hole wall of the locking hole 22411 when the second locking portion 2242 is inserted into the locking hole 22411. The cooperation of the first guide surface 224213 and the second guide surface 224223 with the hole wall of the locking hole 22411 can drive the first elastic portion 22421 and the second elastic portion 22422 to deform in a direction approaching each other, thereby inserting into the locking hole 22411. The first guide surface 224213 may be an inclined surface, a conical surface, a pyramidal surface, or the like, and the second guide surface 224223 may be an inclined surface, a conical surface, a pyramidal surface, or the like. FIG. 15 shows a partial situation where the first guide surface 224213 and the second guide surface 224223 are both conical surfaces, and FIG. 16 shows a situation where the first guide surface 224213 and the second guide surface 224223 are both inclined surfaces.

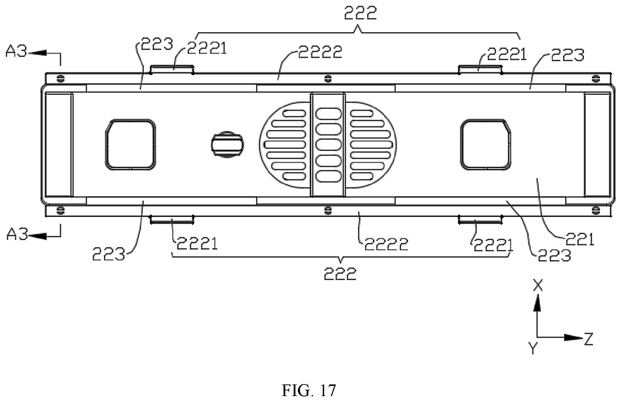

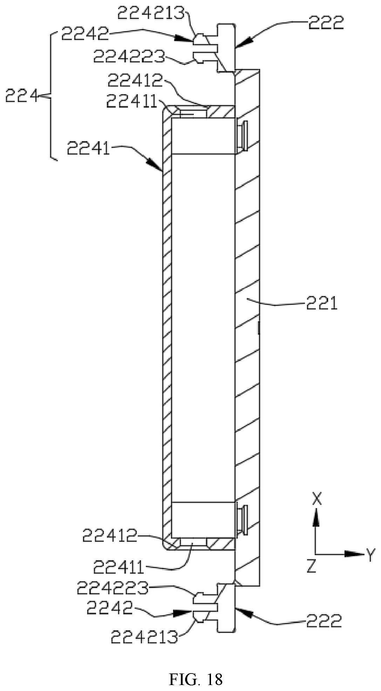

In some embodiments, as shown in FIG. 17 and FIG. 18, the hole wall surface of the locking hole 22411 includes a third guide surface 22412, and the third guide inclined surface extends to the entrance of the locking hole 22411. The third guide surface 22412 is used to cooperate with the first guide surface 224213 and the second guide surface 224223. The third guide surface 22412, the first guide surface 224213, and the second guide surface 224223 cooperate to guide the insertion of the second locking portion 2242 into the locking hole 22411. The third guide surface 22412 may be an inclined surface, a conical surface, a pyramidal surface, or the like. Certainly, as shown in FIG. 12 and FIG. 14, the hole wall surface of the locking hole 22411 may also not include the third guide surface 22412.

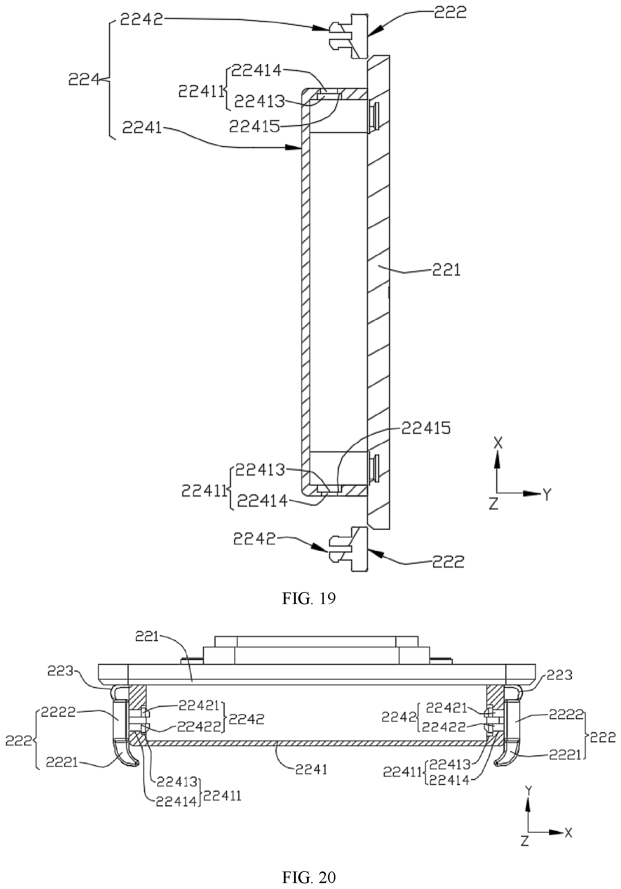

In other embodiments, as shown in FIG. 19 and FIG. 20, the locking hole 22411 may be a two-stage stepped hole. The locking hole 22411 includes a first hole section 22413 and a second hole section 22414 connected, the diameter of the first hole section 22413 is greater than the diameter of the second hole section 22414, and along the first direction X, the first hole section 22413 is connected to an end of the second hole section 22414 away from the first wall portion 211. A step surface 22415 is formed between the first hole section 22413 and the second hole section 22414.

Prior to achieve snapping between the first locking portion 2241 and the second locking portion 2242, an external force is applied to the first elastic portion 22421 and the second elastic portion 22422 to drive the deformation of the first elastic portion 22421 and the second elastic portion 22422, such that the end of the first elastic portion 22421 provided with the first limiting portion 224211 and the end of the second elastic portion 22422 provided with the second limiting portion 224221 approach each other. The deformed first elastic portion 22421 and second elastic portion 22422 are inserted into the locking hole 22411, and then the external force applied to the first elastic portion 22421 and the second elastic portion 22422 is removed. Then, the first elastic portion 22421 and the second elastic portion 22422 restore their original shapes. The surface of the first limiting portion 224211 of the first elastic portion 22421 facing the binding portion 222 and the surface of the second limiting portion 224221 of the second elastic portion 22422 facing the binding portion 222 both abut against the step surface 22415, thereby achieving snapping between the first locking portion 2241 and the second locking portion 2242.

In the embodiment where the locking hole 22411 is a two-stage stepped hole, the first conical surface and the second conical surface may cooperate with the hole wall of the second hole section 22414 of the locking hole 22411 when the second locking portion 2242 is inserted into the locking hole 22411. The cooperation of the first conical surface and the second conical surface with the hole wall of the second hole section 22414 can drive the first elastic portion 22421 and the second elastic portion 22422 to deform in a direction approaching each other, thereby inserting into the second hole section 22414. When the first limiting portion 224211 and the second limiting portion 224221 disengage from the hole wall of the second hole section 22414 and move into the first hole section 22413, the first elastic portion 22421 and the second elastic portion 22422 reset, and the surface of the first limiting portion 224211 facing the binding portion 222 and the surface of the second limiting portion 224221 facing the binding portion 222 both abut against the step surface 22415, thereby achieving snapping between the first locking portion 2241 and the second locking portion 2242. This structure enables the deformation of the first elastic portion 22421 and the second elastic portion 22422 without applying an external force to the first elastic portion 22421 and the second elastic portion 22422.

The second locking portion 2242 includes a first elastic portion 22421 and a second elastic portion 22422 arranged at relative intervals, which facilitates the snapping of the first locking portion 2241 and the second locking portion 2242.

In some embodiments, the first locking portion 2241 is disposed on the insulating body 221, and the second locking portion 2242 is disposed on the binding portion 222; or the first locking portion 2241 is disposed on the binding portion 222, and the second locking portion 2242 is disposed on the insulating body 221.

Exemplarily, as shown in FIG. 10, the first locking portion 2241 is disposed on a side of the insulating body 221 facing the body portion and protrudes from a surface of the insulating body 221 facing the body portion. The first locking portion 2241 and the insulating body 221 may be integrally formed. The first locking portion 2241 and the insulating body 221 may also be separately provided and then connected into a single unit, such as the insulating body 221 and the first locking portion 2241 are welded, adhesively connected, bolted, or the like.

The second locking portion 2242 is provided on the extending section 2222 of the binding portion 222. The second locking portion 2242 and the binding portion 222 may be integrally formed. The second locking portion 2242 and the binding portion 222 may also be separately provided and then connected into a single unit, such as the binding portion 222 and the second locking portion 2242 are welded, adhesively connected, bolted, or the like.

The first locking portion 2241 on the insulating body 221 and the second locking portion 2242 on the binding portion 222 are snap-fitted, facilitating the locking of the insulating body 221 and the binding portion 222.

The first locking portion 2241 is provided on the insulating body 221 and the second locking portion 2242 on the binding portion 222, or the first locking portion 2241 is provided on the binding portion 222 and the second locking portion 2242 on the insulating body 221, to be specific, the first locking portion 2241 and the second locking portion 2242 are respectively provided on the insulating body 221 and the binding portion 222, which facilitates the arrangement of the first locking portion 2241 and the second locking portion 2242 and facilitates the snap-fitting of the first locking portion 2241 and the second locking portion 2242.

In some embodiments, the first locking portion 2241 is provided on the insulating body 221 and protrudes from a surface of the insulating body 221 facing the main body portion 231; and the second locking portion 2242 is provided on the binding portion 222 and protrudes from a surface of the binding portion 222 facing the first tab 233.

The first locking portion 2241 is provided on the insulating body 221 and protrudes from the surface of the insulating body 221 facing the main body portion 231, the first locking portion 2241 can be closer to the main body portion 231, and can restrain the activity range of the electrode assembly 23 inside the casing 21, which alleviates the problem of the electrode assembly 23 moving inside the casing 21.

The first locking portion 2241 may be one or multiple. In the embodiment where there are multiple first locking portions 2241, the multiple first locking portions 2241 are spaced apart on the insulating body 221. As shown in FIG. 5 and FIG. 10, the battery cell 20 includes two first locking portions 2241, and the two first locking portions 2241 are spaced apart along the third direction Z.

The second locking portion 2242 is provided on the binding portion 222 and protrudes from the surface of the binding portion 222 facing the first tab 233, which facilitates the snapping of the second locking portion 2242 with the first locking portion 2241. In the embodiment where the first locking portion 2241 is provided with a locking hole 22411, the second locking portion 2242 protrudes from the surface of the binding portion 222 facing the first tab 233, such that the second locking portion 2242 is insertable into the locking hole 22411, thereby achieving snapping between the first locking portion 2241 and the second locking portion 2242.

The first locking portion 2241 is provided on the insulating body 221 and protrudes from the surface of the insulating body 221 facing the main body portion 231; and the second locking portion 2242 is provided on the binding portion 222 and protrudes from the surface of the binding portion 222 facing the first tab 233, which facilitates the cooperation of the first locking portion 2241 and the second locking portion 2242.

In some embodiments, the casing 21 includes a case 214 and an end cap 215, the case 214 has an opening 213, the end cap 215 seals the opening 213, and the second wall portion 212 is the end cap 215.

The case 214 may be provided with one opening 213, and the corresponding casing 21 includes one end cap 215, the end cap 215 closing the opening 213. The second wall portion 212 is the end cap 215.

The case 214 may be provided with two openings 213, where the two openings 213 may be oppositely arranged along the second direction Y, and the casing 21 may include two end caps 215, where the two end caps 215 are oppositely arranged along the second direction Y. The openings 213 and the end caps 215 are provided in one-to-one correspondence, and the end cap 215 covers the corresponding opening 213. In the embodiment where the casing 21 includes two end caps 215 and tabs 232 are provided at both ends of the main body portion 231 of the electrode assembly 23 along the second direction Y, the two end caps 215 may both be the second wall portions 212.

The second wall portion 212 is the end cap 215, and thus the first wall portion 211 is a wall portion of the case 214, which facilitates the arrangement of the electrode assembly 23 and the first wall portion 211, thereby facilitating the assembly of the battery cell 20.

Continue to refer to FIG. 4 and FIG. 6. In some embodiments, the surface of the first tab 233 facing the first wall portion 211 includes a concave surface 2334, and the binding portion 222 abuts against the concave surface 2334.

The concave surface 2334 is recessed along the direction from the first wall portion 211 toward the electrode assembly 23. The concave surface 2334 forms a recessed region, and the binding portion 222 abuts against the concave surface 2334 in the recessed region formed by the concave surface 2334. In the embodiment where the abutting section 2221 is bent in a direction toward the first tab 233 and an end of the abutting section 2221 away from the extending section 2222 forms an abutting end 22211 that abuts against the first tab root 2331, the abutting end 22211 is bent into the recessed region to abut against the concave surface 2334. The concave surface 2334 may be located on the first tab root 2331 of the first tab 233.

The surface of the first tab 233 facing the first wall portion 211 includes a concave surface 2334, and the binding portion 222 abuts against the concave surface 2334, which improves the stability of the abutting between the binding portion 222 and the first tab 233.

As shown in FIG. 4, in some embodiments, the casing 21 includes two first wall portions 211 arranged oppositely; and the battery cell 20 includes multiple electrode assemblies 23, where the multiple electrode assemblies 23 are arranged along the first direction X between the two first wall portions 211, and along the first direction X, the tabs 232 of the electrode assemblies 23 at both ends are both first tabs 233; and the binding portions 222 are disposed on both sides of the set of the multiple electrode assemblies 23 along the first direction X, and the binding portions 222 on both sides of the set of the multiple electrode assemblies 23 respectively abut against the first tabs 233 of the electrode assemblies 23 at both ends along the first direction X.

All the electrode assemblies 23 are regarded as a single unit, and the binding portions 222 are disposed on both sides of the set of the multiple electrode assemblies 23 along the first direction X.

In the embodiment where the battery cell 20 includes an insulating body 221, binding portions 222 are provided on both sides of the insulating body 221 along the first direction X. Along the first direction X, the structures of the binding portions 222 provided on both sides of the insulating body 221 may be the same or different.

In the embodiment where the battery cell 20 includes one electrode assembly 23, the tab 232 of the electrode assembly 23 is the first tab 233, and along the first direction X, the surface of the first tab 233 closest to the first wall portion 211 abuts against the binding portion 222, and the insulating body 221 may be provided with the binding portion 222 only on a side corresponding to the surface of the first tab 233 closest to the first wall portion 211. Certainly, in the embodiment where the battery cell 20 includes one electrode assembly 23, along the first direction X, binding portions 222 may alternatively be provided on both opposite sides of the insulating body 221, and the binding portions 222 on both sides of the insulating body 221 respectively abut against two opposite surfaces of the first tab 233 of the electrode assembly 23 along the first direction X.

In the embodiment where the battery cell 20 includes multiple electrode assemblies 23, along the first direction X, the casing 21 includes two first wall portions 211 arranged oppositely; the multiple electrode assemblies 23 are arranged between the two first wall portions 211 along the first direction X, and along the first direction X, the tabs 232 of the electrode assemblies 23 at both ends are both first tabs 233. Binding portions 222 are provided on both sides of the insulating body 221 along the first direction X, and the binding portions 222 on both sides of the insulating body 221 respectively abut against the surfaces of the first tabs 233 of the electrode assemblies 23 at both ends along the first direction X facing the corresponding first wall portion 211. As shown in FIG. 4, the battery cell 20 includes two electrode assemblies 23, the tabs 232 of the two electrode assemblies 23 are both first tabs 233, binding portions 222 are provided on both sides of the insulating body 221 along the first direction X, and the binding portions 222 on both sides of the insulating body 221 respectively abut against the surfaces of the first tabs 233 of the two electrode assemblies 23 facing the corresponding first wall portion 211.

Binding portions 222 are provided on both sides of the insulating body 221 along the first direction X, and the binding portions 222 on both sides of the insulating body 221 respectively abut against the first tabs 233 of the electrode assemblies 23 at both ends along the first direction X, which exerts a restraining effect on the first tabs 233 of the two outermost electrode assemblies 23, reduces the gap between layers of the first tabs 233 of the two outermost electrode assemblies 23, and thus reduces the gap between the main body regions of the electrode sheets connected to the first tabs 233. Consequently, the gap between the electrode sheets on a side of the two outermost electrode assemblies 23 closest to the first wall portion 211 is reduced, which helps improve the cycling performance of the battery cell 20.

The multiple electrode assemblies 23 as a whole, the whole is provided with binding portions 222 on both sides along the first direction X, the binding portions 222 on both sides of the set of the multiple electrode assemblies 23 respectively abut against the first tabs 233 of the electrode assemblies 23 at both ends along the first direction X, enabling a restraining effect on the first tabs 233 of the two outermost electrode assemblies 23, reducing the gap between layers of the first tabs 233 of the two outermost electrode assemblies 23, thereby reducing the gap between the main body regions of the electrode sheets connected to the first tabs 233. Consequently, the gap between the electrode sheets 23a on a side of the two outermost electrode assemblies 23 closest to the first wall portion 211 is reduced, which helps improve the cycling performance of the battery cell 20.

In some embodiments, the average charge rate of the battery cell 20 is K, satisfying K≥1.

For example, K is 1, 2, 3, 4, 5, or 6.

The charge rate is a measure of the charging speed, referring to the current value required when the battery 100 is charged to its rated capacity within a specified time.

Exemplarily, a 4C fast charging is used as an example. The battery cell 20 may be fast charged tested according to the following method:
(i) The battery cell 20 is left standing for 10 min, and then the battery cell 20 is charged to 97% SOC (State Of Charge) at an equivalent 4C current.
(ii) The battery cell 20 is left standing for 30 min, and then the battery cell 20 is discharged to 3% SOC with a constant current of 1C.
(iii) Steps (i) and (ii) are repeated for 50 cycles.
(iv) The battery cell 20 is charged to 97% SOC at an equivalent 4C current.
(v) The battery cell 20 is disassembled. Taking a lithium-ion battery cell as an example, the lithium precipitation on the surface of the negative electrode sheet is observed. Exemplarily, the negative electrode sheet is flattened, the total area S1 of the negative electrode active material layer on one side of the negative electrode sheet is measured; the maximum size a along the length direction of the negative electrode sheet is measured for each lithium precipitation point on this negative electrode active material layer (no lithium precipitation around the lithium precipitation point), the maximum size b along the width direction of the negative electrode sheet is measured for each lithium precipitation point, a/2 is taken as the median value of the lithium precipitation point in the length direction, b/2 is taken as the median value of the lithium precipitation point in the width direction, and the area of the lithium precipitation point is a×b/4. The sum of the areas of all lithium precipitation points is S₂, and if S₂/S₁≤5%, the battery cell is deemed to meets the 4C fast charging requirement.

When K≥1, fast charging of the battery cell is achievable.

An embodiment of the present application further provides a battery 100, where the battery 100 includes the battery cell 20 according to the above embodiments.

The battery cell 20 according to the above embodiments has better cycling performance, and the battery 100 including the battery cell 20 has better cycling performance accordingly.

An embodiments of the present application further provides an electric device, where the electric device includes the battery cell 20 according to the above embodiments.

An embodiments of the present application provides a battery cell 20, where the battery cell 20 includes a casing 21, a binding portion 222, an insulating body 221, a second bending portion 223, and two electrode assemblies 23. The casing 21 includes a case 214 and an end cap 215. Along the first direction X, the case 214 has two first wall portions 211 arranged oppositely. Along the second direction Y, one end of the case 214 has an opening 213, and the end cap 215 seals the opening 213. The two electrode assemblies 23 are provided between the two first wall portions 211 along the first direction X. Both the two electrode assemblies 23 include a main body portion 231 and tabs 232, where the tabs 232 are connected to one end of the main body portion 231 close to the end cap 215 along the second direction Y. Each electrode assembly 23 includes two tabs 232 with opposite polarities, the two tabs 232 of each electrode assembly 23 are spaced apart along the third direction Z, and the first direction X, the second direction Y, and the third direction Z are pairwise perpendicular. The battery cell 20 includes an insulating body 221, a second bending portion 223, and two binding portions 222. The insulating body 221, the second bending portion 223, and the two binding portions 222 are integrally formed. The insulating body 221 is provided between the tabs 232 and the end cap 215 to insulate and separate the tabs 232 and the end cap 215. Along the first direction X, the binding portions 222 are respectively provided on both sides of the insulating body 221. The binding portion 222 includes an extending section 2222 and an abutting section 2221, one end of the extending section 2222 is connected to the abutting section 2221, the abutting section 2221 is bent toward the first tab 233, an end of the abutting section 2221 away from the extending end forms an abutting end 22211, and the abutting end 22211 abuts against the concave surface 2334 of the first tab root 2331 of the first tab 233 facing the first wall portion 211. The binding portion 222 includes two abutting sections 2221, where the two abutting sections 2221 are spaced apart along the third direction Z on the extending section 2222. The extending section 2222 of each binding portion 222 is connected to the insulating body 221 via two second bending portions 223. A thickness of the insulating body 221 and a thickness of the extending section 2222 are both greater than a thickness of the second bending portion 223. Each second bending portion 223 is provided with multiple through holes 2232 spaced apart.

The above are only preferred embodiments of the present application and are not used to limit the present application. For those skilled in the art, the present application may have various changes and modifications. Any modifications, equivalent replacements, improvements, and the like made within the spirit and principles of the present application shall be included in the protection scope of the present application.

## Claims

1. A battery cell, comprising:
a casing having a first wall portion;
at least one electrode assembly accommodated in the casing, wherein the electrode assembly comprises electrode sheets stacked along a first direction, the electrode sheets and the first wall portion are stacked along the first direction, the electrode assembly comprises a main body portion and tabs, the main body portion is provided with the tabs at at least one end along a second direction, and the first direction and the second direction intersect with each other; and
a binding portion provided in the casing;
wherein along the first direction, the tab of the electrode assembly closest to the first wall portion is a first tab, and the binding portion is at least partially disposed between the first tab and the first wall portion and abuts against a surface of the first tab facing the first wall portion.

2. The battery cell according to claim 1, wherein the electrode assembly closest to the first wall portion along the first direction has a central plane, the central plane is perpendicular to the first direction, and the first tab is at least partially disposed on a side of the central plane close to the first wall portion.

3. The battery cell according to claim 1, wherein along the first direction, a gap is present between the first wall portion and the main body portion of the electrode assembly closest to the first wall portion.

4. The battery cell according to claim 1, wherein the first tab comprises multiple tab segments stacked along the first direction, wherein a junction between the main body portion and the tab segment closest to the first wall portion among the multiple tab segments of the first tab is a first position; and
the binding portion has an abutting end that abuts against the first tab, and along the first direction, a distance between an end of the abutting end away from the first wall portion and the first wall portion is greater than a distance between the first position and the first wall portion.

5. The battery cell according to claim 4, wherein the surface of the abutting end that abuts against the first tab is an arc surface.

6. The battery cell according to claim 1, wherein the casing has a second wall portion, the second wall portion and the tabs are arranged along the second direction, the battery cell comprises an electrode terminal, and the electrode terminal is disposed on the second wall portion;
the first tab comprises a first tab root, a first bending portion, and a first connection portion, wherein the first tab root is connected to the main body portion, the first bending portion connects the first tab root and the first connection portion, and the first connection portion is electrically connected to the electrode terminal; and
the binding portion abuts against a surface of the first tab root facing the first wall portion.

7. The battery cell according to claim 6, wherein the battery cell further comprises an insulating layer, the insulating layer being at least partially disposed on a surface of the first tab root.

8. The battery cell according to claim 6, wherein the binding portion comprises an abutting section and an extending section, wherein the extending section is at least partially disposed between the first tab and the first wall portion, along a direction from the tab toward the main body portion, the abutting section protrudes from one end of the extending section, and the abutting section abuts against the first tab root.

9. The battery cell according to claim 8, wherein the abutting section protrudes from the extending section along a direction away from the first wall portion in the first direction.

10. The battery cell according to claim 7, wherein the electrode assembly closest to the first wall portion along the first direction has a central plane, the central plane is perpendicular to the first direction, and the first bending portion is located on a side of the central plane facing the first wall portion.

11. The battery cell according to claim 1, wherein the binding portion comprises an extending section and an abutting section, the abutting section being bent from the extending section in a direction toward the first tab.

12. The battery cell according to claim 11, wherein an end of the abutting section away from the extending section forms an abutting end, the abutting end abuts against the first tab, the abutting section has a first surface facing the first tab, the first surface extends to the abutting end, and the first surface is an arc surface.

13. The battery cell according to claim 12, wherein the extending section has a second surface facing the first tab, the first surface and the second surface are connected, and along the direction from the tab toward the main body portion, the distance between the second surface and the first wall portion in the first direction increases gradually.

14. The battery cell according to claim 12, wherein the electrode assembly closest to the first wall portion comprises multiple first tabs, wherein the multiple first tabs are arranged along a third direction; and
the extending section is provided with multiple abutting sections, wherein the multiple abutting sections are spaced apart along the third direction, one first tab corresponds to at least one abutting section, and the first direction, the second direction, and the third direction are non-coplanar and intersect with each other pairwise.

15. The battery cell according to any one of claims 1 to 14, wherein the casing has a second wall portion, wherein the second wall portion and the first wall portion are adjacently arranged and connected, and the second wall portion and the tabs are arranged along the second direction; and
the battery cell further comprises an insulating body, wherein the insulating body is disposed on a side of the tabs facing the second wall portion to insulate and isolate the second wall portion and the tabs, and the binding portion is connected to the insulating body.

16. The battery cell according to claim 15, wherein the binding portion comprises an extending section and an abutting section, wherein the extending section is at least partially disposed between the first tab and the first wall portion, the abutting section protrudes from one end of the extending section, and the abutting section abuts against the first tab; and
the battery cell further comprises a second bending portion, wherein the second bending portion connects the insulating body and the extending section.

17. The battery cell according to claim 16, wherein a thickness of the insulating body and a thickness of the extending section are both greater than a thickness of the second bending portion.

18. The battery cell according to claim 16 or 17, wherein the second bending portion is provided with a through hole, the through hole penetrates both sides of the second bending portion in its thickness direction; and/or the second bending portion is provided with a groove on at least one surface of the second bending portion in its thickness direction.

19. The battery cell according to claim 16, wherein the battery cell comprises multiple second bending portions, wherein the multiple second bending portions are spaced apart along the third direction, and the first direction, the second direction, and the third direction are non-coplanar and intersect with each other pairwise.

20. The battery cell according to claim 15, wherein the binding portion and the insulating body are integrally formed.

21. The battery cell according to claim 15, wherein the battery cell further comprises a locking structure, wherein the locking structure is adapted to lock the binding portion and the insulating body to restrain the binding portion from flipping relative to the insulating body in a direction toward the first wall portion.

22. The battery cell according to claim 21, wherein the locking structure comprises a first locking portion and a second locking portion, wherein the first locking portion is configured to be in snap fit with the second locking portion to lock the insulating body and the binding portion.

23. The battery cell according to claim 22, wherein the first locking portion is provided with a locking hole, and the second locking portion is snapped into the locking hole.

24. The battery cell according to claim 23, wherein the second locking portion comprises a first elastic portion and a second elastic portion arranged at relative intervals, wherein the second locking portion is configured to be insertable into the locking hole when the first elastic portion and the second elastic portion approach each other.

25. The battery cell according to any one of claims 22 to 24, wherein the first locking portion is provided on the insulating body, and the second locking portion is provided on the binding portion; or the first locking portion is provided on the binding portion, and the second locking portion is provided on the insulating body.

26. The battery cell according to claim 22, wherein the first locking portion is provided on the insulating body and protrudes from a surface of the insulating body facing the main body portion; the second locking portion is provided on the binding portion and protrudes from a surface of the binding portion facing the first tab.

27. The battery cell according to claim 21, wherein the casing comprises:
a case having an opening;
an end cap sealing the opening, the second wall portion being the end cap.

28. The battery cell according to claim 1, wherein the surface of the first tab facing the first wall portion comprises a concave surface, and the binding portion abuts against the concave surface.

29. The battery cell according to claim 1, wherein the casing comprises two first wall portions arranged oppositely;
the battery cell comprises multiple electrode assemblies, wherein the multiple electrode assemblies are arranged along the first direction between the two first wall portions, and along the first direction, the tabs of the electrode assemblies at both ends are both the first tabs; and
the binding portions are disposed on both sides of the set of the multiple electrode assemblies along the first direction, and the binding portions on both sides of the set of the multiple electrode assemblies respectively abut against the first tabs of the electrode assemblies at both ends along the first direction.

30. A battery, comprising the battery cell according to any one of claims 1 to 29.

31. An electric device, comprising the battery cell according to any one of claims 1 to 29.
